(19) Europäisches Patentamt
European Patent Office
Office européen des brevets

(11) EP 0 745 827 B1

(12) # FASCICULE DE BREVET EUROPEEN

(45) Date de publication et mention de la délivrance du brevet:
**22.08.2001 Bulletin 2001/34**

(51) Int Cl.$^7$: **F41G 3/22**, G01S 1/02
// G01B7/004

(21) Numéro de dépôt: **96401138.1**

(22) Date de dépôt: **28.05.1996**

(54) **Procédé de détermination de la position et de l'orientation d'un système mobile, notamment de la ligne de visée dans un viseur de casque**

Verfahren zur Bestimmung der Position und Orientierung eines beweglichen Objektes, insbesondere der Blickrichtung eines Helmsichtgeräts

Method for determining the position and the orientation of a movable object, especially the line-of-sight of a helmet-mounted visor

(84) Etats contractants désignés:
**BE DE ES FR GB IT NL SE**

(30) Priorité: **01.06.1995 FR 9506528**

(43) Date de publication de la demande:
**04.12.1996 Bulletin 1996/49**

(73) Titulaire: **THALES AVIONICS S.A.**
**78141 Vélizy Villacoublay Cédex (FR)**

(72) Inventeur: **Lescourret, Jean-Louis**
**92402 Courbevoie Cedex (FR)**

(74) Mandataire: **Benoit, Monique et al**
**Thomson-CSF Propriété Intellectuelle,**
**13, Avenue du Président Salvador Allende**
**94117 Arcueil Cédex (FR)**

(56) Documents cités:
**EP-A- 0 058 412**
**EP-A- 0 581 434**
**US-A- 4 287 809**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention se rapporte à la détermination d'une orientation liée à un système mobile, par exemple à un viseur de casque et a plus particulièrement pour objet un procédé, de détermination d'une orientation liée à un système mobile permettant d'obtenir une grande précision.

Le problème consiste à repérer avec précision la direction d'un axe orienté sans avoir de contact matériel avec lui, en particulier dans les systèmes viseurs de casque utilisés dans les avions de combat ou les hélicoptères. Le fonctionnement d'un tel système est rappelé brièvement ci-après : par un dispositif collimateur annexe, le pilote voit, à travers une glace semi-réfléchissante solidaire du casque et interposée sur un axe de vision, l'image d'un réticule projeté à l'infini en superposition avec la scène extérieure. Lorsqu'il veut désigner une cible, le pilote amène ce réticule à coïncider avec la cible et signale que la coïncidence est réalisée au moyen par exemple d'une commande par bouton poussoir prévue à cet effet.

A condition de repérer, au moment de la signalisation, la position exacte du casque, il est possible de déterminer par rapport à l'avion, la direction de visée et de désigner l'objectif à un système d'arme, ou de pointer dans cette direction un système optique ou autre.

Un brevet US 4 287 809 divulgue un système pour déterminer l'orientation et la position d'un casque, notamment porté par un pilote d'avion.

On connaît notamment par le brevet français n° 79 14441 un dispositif de mesure d'orientation, notamment pour système viseur de casque, dans lequel, pour ramener la ligne de visée déterminée par la position du casque du pilote dans un repère lié à l'aéronef, un capteur de position constitué de trois bobines électromagnétiques orthogonales est placé sur le casque supposé rigide ; par ailleurs, en un point fixe de la cabine, sont placées trois autres bobines électromagnétiques, formant un émetteur. Le procédé consiste alors à faire passer successivement, dans chaque bobine de l'émetteur, formant le trièdre fixe, un courant électrique. Ces courants font apparaître successivement, trois champs magnétiques associés qui sont captés par les bobines du capteur, formant le trièdre mobile lié au casque.

Pour chaque champ magnétique émis les trois composantes orthogonales correspondantes sont captées dans les bobines du capteur. Les neuf composantes résultantes permettent de passer du trièdre mobile au trièdre fixe. En effet, ces neuf composantes dépendent :

- de la position du capteur dans l'espace ;
- de l'orientation du capteur.

En fait, la transformation résultant d'une telle méthode peut être assez différente de la transformation des coordonnées permettant de passer effectivement du trièdre de référence mobile au trièdre de référence fixe par rapport à l'aéronef, notamment du fait que l'on utilise des champs magnétiques. En effet, ces champs peuvent être notablement perturbés du fait de courants électriques circulant dans tous les éléments métalliques de l'environnement de la cabine, par exemple des courants de Foucault. De plus, des défauts inhérents à la réalisation des bobines d'émission ou de réception magnétiques créent également des modifications par rapport au champ dipolaire.

La détermination d'une direction en utilisant les lois de l'électromagnétisme en espace libre, sans perturbations n'est donc pas possible quand l'espace considéré est la cabine de pilotage d'un aéronef, ou un environnement quelconque formé par des pièces conductrices.

C'est pourquoi certains dispositifs connus prévoient, avant chaque mesure, la mise en mémoire de mesures préalables et la comparaison de mesures effectuées à un instant donné avec les mesures mises en mémoire afin de déterminer la rotation qui fait passer du trièdre fixe au trièdre mobile. Une telle méthode nécessite la mise en mémoire d'une quantité très importante de mesures qui doivent être reprises intégralement dès que des paramètres tels que, par exemple, la position exacte de l'émetteur mobile par rapport à la ligne de visée, changent.

D'autres procédés permettant d'améliorer les performances ont été réalisés comme dans le brevet français 90 08230. Toutefois, comme il est mentionné dans ce brevet, la méthode de modélisation prend globalement en compte trois sources de génération des champs magnétiques à savoir :

- les antennes d'émission et de réception, y compris leurs défauts
- les perturbations dues aux courants de Foucault circulant dans les parties conductrices du cockpit, parfois décrites comme des réflexions des champs émis par l'émetteur
- les perturbations dues aux parties conductrices et magnétiques fixées sur le casque du pilote, et donc liées au repère capteur magnétique.

Le principal inconvénient des méthodes de l'état antérieur est le manque de précision et de robustesse, c'est-à-dire une sensibilité trop importante, vis-à-vis des variations des champs émis par les trois sources précédentes dépendant elles-mêmes :

- des variations de position et orientation de l'émetteur dans un repère de référence
- des variations géométriques des cockpits se traduisant par des variations de position et orientation des perturbations, de plaques métalliques par exemple, par rapport à un repère mécanique de référence
- des variations des positions ou des orientations des pièces perturbantes fixées sur le casque (casques de différentes tailles, personnalisation des réglages inter-pupillaires pour chaque pilote...).

En ce qui concerne la cabine (cockpit) des avions ou hélicoptères, il faut distinguer deux types de variation :

- des variations dans le temps d'une même cabine (vibrations, efforts au cours des vols, ...)
- les variations par rapport à une cabine de référence.

La seconde cause est la plus importante et la plus difficile à résoudre. La méthode indiquée dans le brevet 90 08230 ne résout pas ces problèmes et de plus suppose que la cartographie magnétique faite initialement est applicable sur toutes les cabines de même type.

Or, il est très difficile d'obtenir une précision très importante en restant robuste par rapport à des changements de casques ou seulement leur démontage/remontage pour un même ou plusieurs cockpits, et à des changements de cockpits pour un ou plusieurs casques différents, c'est-à-dire un ou plusieurs pilotes notamment.

Les précédentes méthodes connues ne résolvent pas les problèmes d'interchangeabilité, ou ne présentent pas toutes les garanties de maintien des performances par changement de cabines ou/et changement de casque.

La présente invention a pour but de pallier les inconvénients précités. A cet effet, l'invention a pour objet un procédé de détermination d'une position et d'une orientation d'un système mobile par rapport à un émetteur de champ électromagnétique, le système mobile placé dans un porteur étant lié à un capteur de champ magnétique, caractérisé en ce qu'il comporte :

- une première étape de modélisation analytique des champs électromagnétiques en fonction des coordonnées du capteur, un premier champ ($B_0$) étant crée par l'émetteur, un deuxième champ ($B_1$) étant créé par les courants électriques induits dans le porteur par le premier champ ($B_0$) et un troisième champ ($B_2$) étant créé par les courants électriques induits dans le système mobile par les deux premiers champs ($B_0 + B_1$), l'effet électromagnétique de chaque champ ($B_0$, $B_1$, $B_2$) étant caractérisée indépendamment des effets des autres champs par les coefficients de son propre modèle ;
- une deuxième étape de calcul, en temps réel, de la position et de l'orientation du capteur en utilisant la mesure courante du champ électromagnétique au niveau du capteur et en utilisant les modèles ($B_0$, $B_1$, $B_2$) de la première étape, la position et l'orientation du capteur étant définie à partir du champ mesuré ($B_m$) auquel le troisième champ ($B_2$) a été retranché.

L'invention a pour principaux avantages qu'elle permet :

- d'améliorer les performances des méthodes précédentes et aussi celle décrite dans le brevet 90 08230, tout en étant plus robuste par rapport aux déformations temporelles du cockpit ;
- de rendre le système insensible aux variations d'environnement (cockpit, casque). La méthode du brevet 90 08230 nécessite la mise en oeuvre de mesures cartographiques pouvant durer 24 à 30 heures, plus de 20 000 points de mesure étant nécessaires, pour utiliser des ordres de polynômes élevés afin d'assurer la précision requise, l'aéronef étant alors immobilisé plus d'une semaine ;
- d'identifier séparément les 3 sources de perturbation de manière simple et surtout quasi "transparentes" pour l'utilisateur, c'est-à-dire sans que cela augmente le temps d'immobilisation de l'aéronef nécessaire à une harmonisation. L'harmonisation étant définie comme l'opération permettant soit de régler un référentiel de mesure parallèle au référentiel de l'aéronef,

soit de mesurer les coordonnées angulaires de ses vecteurs unitaires dans ce même référentiel de l'aéronef. Une cartographie d'une demi-heure à deux heures suffisant pour la mise en oeuvre du procédé objet de l'invention.

Pour des cabines différentes d'une même série, l'harmonisation de l'émetteur par des moyens optiques par rapport au repère de référence avion est remplacée par une mesure magnétique (mesures permettant de déterminer la position et l'orientation de l'émetteur).

Une caractéristique de l'invention est notamment d'associer un modèle polynominal exprimant globalement et de façon approchée la position/orientation du système mobile en fonction de mesures par exemple du type du brevet français n° 90.08230 et un modèle des champs non linéaire par rapport à la position/orientation du capteur. Le premier modèle permet une résolution approchée non itérative pour donner une position/orientation approchée. Le second modèle utilise les valeurs approchées de la résolution précitée pour identifier très précisément, ou du moins plus

précisément la position/orientation en un temps très court par une méthode itérative d'un critère non linéaire.

D'autres caractéristiques et avantages de l'invention apparaîtront à l'aide de la description qui suit, faite en regard de dessins annexés qui représentent :

- La figure 1, un premier système de cartographie pour la mise en oeuvre du procédé selon l'invention,
- La figure 2, un deuxième système de cartographie utilisé pour plusieurs opérations de modélisation ou de caractérisation de divers sous-ensembles,
- La figure 3, une illustration d'une mise en oeuvre possible de la première étape du procédé selon l'invention,
- La figure 4, un casque de pilote équipé d'un capteur de champ magnétique et d'éléments produisant des perturbations électromagnétiques,
- La figure 5, une modélisation possible d'une source de perturbation électromagnétique précitée,
- La figure 6, une représentation d'une perturbation électromagnétique causée par la source précitée,
- La figure 7, une illustration d'une mise en oeuvre possible de la deuxième étape du procédé selon l'invention,
- La figure 8, une illustration d'une sous-étape possible du procédé selon l'invention.

La modélisation du champ électromagnétique dans un cockpit est fondée sur les hypothèses suivantes :

Le champ global est la somme de trois champs

- le champ $B_0$ produit par les bobines d'émission ;
- le champ $B_1$, induit par $B_0$ qui provoque des courants de Foucault dans les conducteurs fixes du cockpit ;
- le champ $B_2$, induit par $B_0 + B_1$ qui provoque des courants de Foucault dans les conducteurs mobiles dans le champ et liés à l'équipement de tête (casque). En général $|B_2| < |B_0 + B_1|$.

La somme $B_0 + B_1$ est le champ existant dans le cockpit, en l'absence de conducteurs dans le casque.

Les champs sont exprimés par des fonctions analytiques, dont les paramètres sont les coordonnées du capteur ; ces fonctions sont solutions des équations des champs selon les équations de Maxwell connues.

Les solutions des équations des champs ne dépendent théoriquement que des conditions aux limites du volume, c'est-à-dire à sa surface.

Par la suite, on recherchera une modélisation séparée des champs $(B_0 + B_1)$ et $B_2$. Pour la modélisation de $(B_0 + B_1)$, on utilise la connaissance du modèle de $B_0$ (espace libre), pour en déduire le champ $B_1$.

La détermination de l'orientation du capteur fixé sur le casque s'opère en effectuant une cartographie magnétique à partir de laquelle un modèle du champ magnétique est déterminé pour le volume de débattement du capteur.

Sur la figure 1, est présenté le synoptique général d'un premier système de cartographie pour la mise en oeuvre du procédé selon l'invention comportant :

- une antenne d'émission pour l'émetteur 1 liée à un repère $R_E$ de centre $O_E$;
- une antenne de réception pour le capteur 2 liée à un repère $R_C$ de centre $O_C$;
- un équipement de tête 5 (casque équipé) composé d'une coque sur laquelle sont fixés notamment le capteur 2, son préamplificateur 3, le (ou les) tube (s) CRT 6, le module optique 19. Le module optique est constitué d'un système de génération d'un symbole et d'un système optique de collimation à l'infini, et enfin d'un système semi-réfléchissant permettant de superposer ce symbole au paysage extérieur, définissant la ligne de visée $L_V$. L'équipement de tête comporte en outre une mémoire 7 associée au capteur 2, et une mémoire 8 associée au casque. Ces mémoires sont par exemple des PROM, EPROM ou EEPROM.
- une unité centrale 10 de l'équipement ;
- un circuit d'interface 30 et un calculateur de dialogue 60 connectés pour la gestion des mémoires associées aux sous-ensembles interchangeables, capteur, casque par exemple, ou pour le téléchargement de programmes. Un module de connexion 12 relie l'équipement de tête à l'unité centrale 10. Un bus d'alimentation est relié aux circuits.

Une mémoire 9, placée par exemple sur un amplificateur 11 câblé entre l'antenne d'émission 1 et l'unité centrale 10, est associée à l'antenne d'émission 1. Une mémoire 14 associée au porteur, c'est-à-dire par exemple au cockpit ou cabine de l'aéronef est reliée par exemple à l'unité centrale 10. Ces mémoires sont par exemple des PROM, EPROM ou EEPROM. La mémoire 9 associée à l'antenne d'émission 1 contient des coefficients définissant un modèle du champ $B_0$, précité. La mémoire 14 associée au porteur contient des coefficients définissant un modèle du champ $B_1$ précité. La mémoire 8 associée au casque contient des coefficients définissant un modèle du champ $B_2$ précité. Les mémoires associées aux éléments ou sous-ensembles 7, 8, 9, 14 chargées de leurs coefficients font, par exemple, parties intégrantes de ces éléments ou sous-ensembles. Elles sont par exemple chargées en usine avant d'être associées à leurs éléments respectifs. Chaque élément ou sous-ensemble 7, 8, 9, 14 est monté ou changé avec sa mémoire associée, le sous-ensemble 14 est associé avec le cockpit.

Sur la figure 2, est présenté pour la mise en oeuvre du procédé selon l'invention le synoptique d'un second système de cartographie, pour la mise en oeuvre du procédé selon l'invention, utilisé pour plusieurs des opérations de modélisation ou caractérisation des divers sous-ensembles ou cockpit.

En effet, il peut être utilisé de façon indifférente :

- pour caractériser les antennes en usine, en utilisant un modèle espace libre $B_0$, c'est à dire sans perturbations le capteur étant alors monté sur un support spécifique, ou une coque de casque permettant de positionner le capteur conformément à l'utilisation réelle sur le casque ;
- pour caractériser les casques équipés en utilisant un modèle $B_2$ défini par la suite ;
- pour caractériser les perturbations du porteur, la configuration étant identique à la première mentionnée ci-dessus utilisée en usine pour caractériser les antennes. L'ensemble est harmonisé dans le repère de l'avion de façon connue. Une cartographie magnétique est réalisée en translations et aussi par rotations si nécessaire, du capteur dans le volume de la cabine de l'aéronef. Selon l'invention, toutes les matrices de mesures sont mémorisées. A titre indicatif, mille matrices de 9 termes suffisent pour obtenir un bon modèle de l'environnement du cockpit.

Le capteur 2 est monté sur un support mécanique 21 qui permet de le faire tourner selon trois rotations orthogonales R, S, G.

Le principe de l'invention consiste en une première étape de modélisation initiale comprenant :

- une modélisation analytique des champs électromagnétiques en fonction des coordonnées du capteur, et satisfaisant les lois de l'électromagnétisme ;
- une modélisation séparée des effets, en particulier ceux
  - ♦ liés au matériel :

    en créant un modèle $B_0$ des antennes d'émission et réception en espace libre avec leurs corrections ;
    et un modèle $B_2$ des effets perturbateurs du casque et équipement de tête

  - ♦ liés à l'environnement dans lequel est utilisé le matériel :
    en créant un modèle $B_1$ des effets perturbateurs dus aux pièces conductrices de la cabine.

- une caractérisation de chaque source de perturbation indépendamment l'une de l'autre, par identification des coefficients de son propre modèle, coefficients qui sont ensuite mémorisés dans des mémoires, par exemple PROM, EPROM, ou EEPROM, associées aux éléments modélisés considérés comme "interchangeables", ces éléments sont par exemple l'émetteur, le capteur, le casque, le porteur (cabine ou cockpit par exemple).

Dans une deuxième étape le procédé selon l'invention consiste en un calcul, en temps réel, de la position et l'orientation notamment du capteur ainsi que du casque et de la ligne de visée, en utilisant la mesure courante et le modèle mémorisé.

Cette seconde étape fait appel, par exemple, à :

- un algorithme non itératif permettant de fournir une valeur approchée de la position et l'orientation du capteur en un temps très court ;
- un algorithme itératif permettant d'optimiser le calcul de la position et l'orientation du capteur qui interviennent dans le modèle analytique dont les paramètres sont mémorisés dans les mémoires associées 7, 8, 11, 14.

L'utilisation du modèle du casque $B_2$ doit notamment satisfaire aux conditions suivantes :

- les modèles d'antenne $B_0$ et du cockpit $B_1$ étant déterminés, le modèle de $B_2$ s'applique indifféremment à tous les champs ($B_0 + B_1$) pourvu qu'ils soient connus eux-mêmes, les coefficients de $B_2$ étant déterminés sans connaître $B_1$ à l'origine. Notamment, les coefficients de $B_2$ s'identifient indépendamment de $B_1$ c'est-à-dire en usine par exemple, $B_0$ étant généré et connu. Par contre, la compensation de $B_2$ dans le cockpit, qui dépend de ($B_0 + B_1$) est valable pour tout ($B_0 + B_1$) pourvu que les paramètres de $B_0$ et $B_1$ soient connus et utilisés dans le modèle de compensation de $B_2$ ;
- L'identification ou caractérisation des antennes et du casque, c'est-à-dire l'ensemble de l'équipement est faite en usine ; celle du cockpit est faite indépendamment sur le site avec un outillage de cartographie sans casque avec des antennes préalablement caractérisées. Tout cela est rendu réalisable par la complète interchangeabilité des sous-ensembles (cartes, amplificateurs, antennes après corrections). Un outillage de cartographie est par exemple

un capteur étalonné sur son support mécanique. Ce support peut être harmonisé dans le repère avion de référence, par des mesures magnétiques, par exemple, ou bien son orientation peut être mesurée optiquement dans le repère avion.

Avant de décrire plus en détail les étapes du procédé selon l'invention, les notations suivantes doivent être prises en considération :

$$\vec{v} = \begin{vmatrix} \left(\vec{\hat{X}}\right) \\ \vec{Rot} \end{vmatrix} \quad \text{avec } \bar{X} = \begin{vmatrix} \hat{X} \\ \hat{Y} \\ \hat{Z} \end{vmatrix} \quad \hat{X}, \hat{Y}, \hat{Z} \text{ étant les coordonnées estimées du capteur X, Y, Z}$$

$$\vec{Rot} = \begin{vmatrix} G \\ S \\ R \end{vmatrix} \quad G, S, R \text{ étant les angles définissant la rotation du repère capteur } (C)$$

Il est à noter que $\vec{Rot} \neq [ROT]$, $\vec{Rot}$ étant un vecteur, $[ROT]$ étant la matrice correspondante.
Le vecteur $\vec{\hat{v}}$ est l'estimée du vecteur $\vec{v}$.
Les modèles $B_0$, $B_1$, $B_2$ sont définis par les fonctions :

$$B_0 = B_0\left(\vec{A}_0, \vec{X}\right)$$

$$B_1 = B_1\left(\vec{A}_1, \vec{X}\right)$$

$$B_2 = B_2\left(\vec{A}_2, \vec{X}, \vec{Rot}\right)$$

$$\left(\vec{A}_0\right)$$

est le vecteur de paramètres caractérisant les antennes : capteur i et émetteur j. On peut donc définir $\vec{A_0}$ par

$$\left(\vec{A}_0\right)_{ij}$$

pour relier les jeux de paramètres aux antennes correspondantes.

$$\left(\vec{A}_1\right)_{\ell}$$

est le vecteur de paramètres du champ $B_1$ de la cabine numéro $\ell$.

$$\left(\vec{A}_2\right)_{k}$$

est le vecteur de paramètres du champ $B_2$ relatif au casque numéro k.

$$\left(\vec{A}_{MK1}\right)$$

est le vecteur dont les composantes sont les paramètres du modèle ($B_0$ + $B_1$) identifiés par la méthode décrite dans le brevet 90.08230 pour une configuration standard (antenne, casque et cockpit standards).

La figure 3 illustre la première étape du procédé selon l'invention. Cette première étape, de modélisation, comprend une première sous-étape 31 de détermination des coefficients du modèle des effets du capteur n° i et de l'émetteur n° j en espace libre.

L'obtention du modèle en espace libre $B_0$ est obtenue de la manière suivante :

- A chaque émission, on dispose des trois composantes du champ émis, soient les trois vecteurs :
  $\vec{M}_1, \vec{M}_2, \vec{M}_3$
  que l'on regroupe en une matrice de mesure

$$[M] = \left[\vec{M}_1, \vec{M}_2, \vec{M}_3\right]$$

  *ou* $[M]_i$ = matrice de mesure à l'instant i.
- L'objet du modèle $B_0$ en espace libre est d'identifier l'ensemble des paramètres dont dépend ce modèle, à savoir :
  - \+ les coordonnées angulaires définissant la matrice de passage du repère de référence au repère Emetteur (E) $R_{E/\mathrm{Ref}}$ et de position $\vec{X}_E$ de l'émetteur dans un repère de référence Réf ;
  - \+ les coordonnées angulaires du capteur dans un repère de référence $C_0$ lorsque l'outil, c'est-à-dire le support capteur est en position angulaire de référence définissant la matrice de $R_{Co/\mathrm{Ref}}$ de passage du repère R au repère $C_O$.
  - \+ les matrices de correction de facteur d'échelle et de couplage de l'émetteur $[H_R\ K_R]$ et du capteur $[H_C\ K_C]$
  - \+ le gain global émetteur capteur : $k_{CR}$.
- L'écriture du modèle de la mesure dans le repère du capteur (C) est le suivant, en supposant que le repère de

référence (R) est un repère mécanique comme noté (M):

$$\hat{M} = k_{CR}\,[H_C\,K_C]^t\,(R_{CO/M})^t\,(R_{C/CO})^t_M\,(R_{E/M})_M\,\frac{P}{\rho 3}[H_3]^{p^t}\,[H_R\,K_R]$$

Cela revient à exprimer :

$$B_E = \frac{1}{\rho 3}\,P\,[H_3]^{p^t},$$

expression connue du champ magnétique d'un dipôle dans le repère orthonormé de l'émetteur avec classiquement:

$$[H_3] = \begin{bmatrix} 2 & 0 & 0 \\ 0 & -1 & 0 \\ 0 & 0 & -1 \end{bmatrix}$$

matrice de couplage magnétique dipolaire.

$$[P] = \left[\vec{U}_{XE}, \vec{U}_{XE^{\perp}}, \vec{U}_{XE^{\perp\perp}}\right]$$

$\vec{U}_{XE}$ est le vecteur unitaire de $\vec{X}_E = \vec{X}_{OC} - \vec{X}_{OE}$, c'est-à-dire du vecteur émetteur-capteur

$$\left(\vec{X}_{OC}, \vec{X}_{OE}\right)$$

: vecteurs dont les composantes sont respectivement les coordonnées du centre du capteur et celles du centre de l'émetteur dans le repère émetteur.

$\vec{U}_{XE^{\perp}}$ et $\vec{U}_{XE^{\perp\perp}}$ sont les vecteurs unitaires perpendiculaires formant le repère orthonormé dit repère radial.

La mesure corrigée s'écrit dans le repère capteur (C) :

$$[B_C] = \frac{1}{k_{C_R}}\,[H_C\,K_C]^{-1}$$

$[M]\,[H_R\,K_R]^{-1}$ noté $[B_c]_i$ à l'instant i.
dans laquelle :

$H_C$ et $H_R$ sont les matrices définies par les vecteurs unitaires des axes respectivement capteur et émetteur exprimés dans un repère orthonormé lié à des éléments (l'axe $\vec{X}$ de ces repères est colinéaire avec un axe pris comme référence, les deux autres axes perpendiculaires forment un repère orthonormé) ;
$k_{CR}$ est un coefficient de normalisation des facteurs d'échelles émetteur et capteur globalement.

On a donc la relation dans le repère de référence mécanique :

$$B_C = (R_{CO/M})^t_M\,(R_{C/CO})^t_M\,(R_{E/M})_M\,B_E$$

$$= (R_{C/M})^t_m (R_{E/M})_M\,B_E$$

$$B_C = (R_{C/M})^t (B_E)_M$$

$B_E$, $(B_E)_M$ *et* $B_C$ sont les composantes des vecteurs champs exprimés respectivement dans le repère de l'émetteur, le repère mécanique et le repère capteur.

L'identification du modèle espace libre dipolaire consiste à calculer à partir d'un certain nombre de mesures M et des rotations $(R_{C/CO})_M$, les paramètres suivants du modèle

$$k_{CR}, [H_C\ K_c], [H_R\ K_R], [R_{E/M}], [\bar{X}_{OE}]_M, [R_{CO/M}],$$

faisant respectivement 1 terme, 5 termes, 5 termes, 3 termes, 3 termes et 3 termes ce qui fait 20 termes au total, regroupés dans le vecteu

$$\left(\vec{A}_0\right).$$

Ensuite en utilisation en espace libre, il s'agit de trouver à partir de la mesure M, la position et l'orientation du capteur (de laquelle on déduit la ligne de visée) de la façon suivante :

Calcul de :

a) $B_M$ (connaissant $k_{CR}$, $[H_C\ K_C]$, $[H_R, K_R]$)
b) $\vec{X}_E$ soit $\vec{\rho}$ *et* $\vec{P}$

dont on déduit

$$\vec{B}_E = \frac{1}{\hat{\rho}^3}\,\hat{P}\,[H_3]\,\hat{P}^t$$

Connaissant $R_{E/M}$, on en déduit $(B_E)_M$, champ $B_E$ exprimé dans le repère de référence (mécanique $M$).

On en déduit

$$\left[\hat{R}_{C/M}\right] = \left[\hat{B}_E\right]_M \cdot \left[B_M\right]^{-1}$$

En présence d'émission non dipolaire, les termes de la matrice de couplage magnétique ne sont plus constants mais dépendent du vecteur $\vec{X}_E$ selon les fonctions associées de Legendre connues de l'homme du métier.

Les coefficients, qui sont les composantes du vecteur

$$\left(\vec{A}_0\right)_{ij}$$

sont mémorisés dans la mémoire 7 associée au capteur n° i et dans la mémoire 11 associée à l'émetteur n° j.

La première sous-étape 31 est suivie d'autres sous-étapes 32, 33 qui utilisent par exemple les coefficients

$$\left(\vec{A}_0\right)_{ij}$$

Une sous-étape suivante 32 consiste en la modélisation d'un casque n° k équipé avec un capteur n° i' par des mesures en Espace Libre.

Les figures 4, 5 et 6 illustrent un exemple d'obtention du modèle B2 du casque n° k.

Sur la figure 4, un capteur est représenté par un repère orthonormé *C* d'origine $O_C$, le capteur est par exemple fixé sur le casque 41. Des sources de perturbation électromagnétiques 42, 43, 44 sont par ailleurs elles aussi fixées sur le casque 41. A titre d'exemple, elles sont limitées à trois. Elles sont représentées par des repères orthonormés $S_1$, $S_2$, $S_3$,...$S_k$ d'origines respectives $0_1$, $0_2$, $0_3$, ... $0_k$ et d'axes respectifs $X_1,Y_1,Z_1$, $X_2,Y_2,Z_2$ $X_3,Y_3,Z_3$ *et* $X_k,Y_k,Z_k$. Les directions de $(X_1,Y_1,Z_1)$,$(X_2,Y_2,Z_2)$,$(X_3,Y_3,Z_3)$,$(X_k,X_k,X_k)$ sont quelconques. Les origines $0_1$,$0_2$, $0_3$...$0_k$ des repères sont par exemple les centres des sources de perturbations 42, 43, 44. Par la suite, celles-ci seront confondues avec leurs repères.

Le repère orthonormé *C* du capteur est mobile dans un repère de référence (Réf) d'origine $O_R$. Les repères $S_1$,$S_2$,$S_3$, et plus généralement les repères $S_k$ lorsque $k$>3, des sources de perturbation sont fixes par rapport au repère (*C*) du capteur. Un repère orthonormé (*E*) d'origine $O_E$, fixe dans le repère de référence (Réf) est par exemple lié à un émetteur d'induction magnétique, servant notamment à l'aide du capteur fixé sur le casque i à déterminer la position et l'orientation de ce dernier comme expliqué précédemment.

Dans une première phase, les sources de perturbation $S_1$,$S_2$,$S_3$,...$S_k$ étant plongées dans un champ magnétique donné ambiant, produit par exemple par l'antenne d'émission [$B_O$], pour chaque source, le modèle de la perturbation d'une source au niveau du capteur *C* est exprimé comme une fonction explicite du champ moyen existant, par exemple à l'origine $O_k$ du repère définissant cette source. Cela permet notamment de définir un modèle de la source dépendant explicitement du champ dans lequel est plongé chaque source $S_k$, et par conséquent de pouvoir déterminer les paramètres du modèle de la source en dehors de son environnement électromagnétique d'utilisation, ceux-ci étant indépendants du champ ambiant.

Dans une deuxième phase, le capteur *C* étant plongé dans le champ magnétique à mesurer. La perturbation causée par chaque source $S_k$ est déterminée à l'aide de son modèle et du champ magnétique moyen existant à son niveau. Dans une troisième phase, la somme des perturbations dues aux sources est effectuée. Enfin, dans une quatrième phase, cette somme est retranchée à la mesure réalisée par le capteur C.

De cette manière, l'ensemble des paramètres du modèle de source représentatif du phénomène de perturbation produit par cette dernière, est indépendant du champ dans lequel est plongé le capteur et l'ensemble des sources, donc dans l'exemple d'application, cet ensemble de paramètres du modèle est indépendant du champ magnétique dans lequel est plongé le casque. C'est à dire que la détermination du modèle peut se faire notamment dans un champ différent du champ utilisé de manière opérationnelle par le pilote. La première phase précitée peut ainsi être par exemple réalisée en usine en dehors de l'environnement opérationnel, c'est à dire en dehors de la cabine d'aéronef par exemple. Dans le cas d'application au viseur de casque notamment, les modèles de source peuvent être identifiés en usine par des moyens spécifiques, tels qu'un émetteur quasi-dipolaire rayonnant en espace libre par exemple, et être utilisés dans une cabine d'aéronef quels que soient les champs électromagnétiques existant dans une bande de fréquence contenant la fréquence d'oscillation du champ produit par l'émetteur *E* fixé dans la cabine, pourvu que leur modèle soit connu par ailleurs et identifié dans une étape précédente.

La création d'un modèle représentatif de la perturbation d'une source peut être réalisée notamment en considérant de manière simplifiée qu'une source, et notamment une pièce conductrice, se comporte comme une ou plusieurs boucles élémentaires de courant.

En espace libre, par exemple, le champ magnétique mesuré par le capteur *C* est la somme du champ émis par l'émetteur *E* et des champs produits par chaque source $S_k$ du casque. Ce champ magnétique mesuré peut s'exprimer par la relation suivante :

$$B_c\left(O_c\right) = \left(R_{C/E}\right)^t\ B_E\left(O_c\right) + \sum_{k=1}^{NS} R^t_{c/S_k}\ f_k\left(B_k\left(O_k\right)\right)_{S_k} \qquad (1)'$$

- $B_c\ (O_c)$ étant le champ total mesuré exprimé dans le repère *C* du capteur et au centre $O_c$ du capteur ;
- $B_E\ (O_c)$ étant le champ ambiant, produit par exemple par l'émetteur au centre $O_c$ du capteur et exprimé dans le repère *E* de l'émetteur, ce champ $B_E\ (O_c)$ est le champ à mesurer ;

- $(R_{c/E})^t$ étant la matrice transposée de la matrice de passage du repère $E$ de l'émetteur au repère $C$ du capteur ;
- $R_{c/E}$ S'écrit $(R_{c/\mathrm{Ref}})_E\,(R_{E/\mathrm{Ref}})^t{}_E = (R_{E/\mathrm{Ref}})^t{}_{\mathrm{Ref}}\,(R_{c/\mathrm{Ref}})_{\mathrm{Ref}}$ où $R_{c/\mathrm{Ref}}$ est la matrice de passage du repère de référence Ref au repère capteur ($C$), exprimée dans le repère $E$, elle s'écrit $(R_{c/\mathrm{Ref}})_E$ ou dans le repère Ref, elle s'écrit $(R_{c/\mathrm{Ref}})_{\mathrm{Ref}}$.
- $R^t{}_{c/E}\,B_E\,(O_c) = R^t{}_{c/\mathrm{Ref}}\,[B_E\,(O_c)]_{\mathrm{Ref}}\,[B_E(O_c)]_{\mathrm{Ref}}$ est le champ ambiant exprimé dans le repère de Référence Ref.
- $B_k(O_k)$ est le champ magnétique moyen au centre $O_k$ et exprimé par exemple dans le repère $S_k$ ;
- la fonction $f_k$ représente la relation existant entre le champ ambiant au point $O_k$ et le champ perturbant au point $O_c$ produit par la source k et exprimé dans le repère $(S_k)$.
- $R_{c/Sk}$ est la matrice de passage du repère $S_k$ de la source $S_k$ au repère C du capteur ;
- $NS$ est le nombre de sources perturbatrices.

La figure 5 illustre un modèle représentatif de la perturbation d'une source $S_k$. Ce modèle est constitué d'une boucle ou spire élémentaire $SP_k$ de centre $O_k$, origine du repère orthonormé $S_k$ de la source, et de rayon $r_k$. Il est supposé que le champ magnétique moyen $B_k(O_k)$ au centre de la spire $SP_k$ est sensiblement constant dans une sphère de rayon $r_k$. Le champ moyen est donc supposé réparti de façon sensiblement constante dans la spire.

Ce champ moyen est variable dans le temps et provoque dans la spire un courant $i_k$ proportionnel à sa variation selon la loi connue de Lentz. Ce courant provoque à son tour un champ magnétique selon les lois connues de l'électromagnétisme.

La source peut aussi être une aimantation induite par le champ ambiant dans des matériaux perméables (effets ferromagnétiques).

En considérant dans un premier temps une spire élémentaire de faibles dimensions, l'expression du courant $i_k$ circulant dans la spire élémentaire plongée dans le champ moyen $B_k(O_k)$ est donnée par la relation suivante :

$$R_k\,i_k + L_k\,\frac{d}{dt}\,i_k = -\,\frac{d\,\phi k}{dt} \qquad (2)'$$

$R_k$ *et* $L_k$ étant respectivement la résistance ohmique et l'auto-inductance de la spire $SP_k$, $\phi_k$ étant le flux magnétique traversant la spire.

Pour un champ magnétique $B_k(O_k)$ au niveau de la spire variant sinusoïdalement dans le temps à la pulsation $\omega$, il vient :

$$i_k[R_k + j\,L_k\,\omega] = -\,j\,A_k\,\omega(\vec{B}_k(O_k).\vec{n}_k) \qquad (3)'$$

- $A_k$ étant l'aire de la spire $SP_k$ ;
- $\vec{n}_k$ étant la normale à la spire ;
- $\vec{B}_k(O_k).\,\vec{n}_k$ représentant le produit scalaire du vecteur champ magnétique ambiant au centre de la spire par la normale $\vec{n}_k$ à cette spire.

De la relation (3), il vient

$$i_k = -\,j\,\frac{A_k\,\omega}{R_k + j\,L_k\,\omega}\vec{B}_k(O_k).\vec{n}_k \qquad (4)'$$

En notant I le module du courant alternatif $i_k$, il vient :

$$I = |i_k|\,|\alpha|\,\vec{B}_k(O_k)\,.\,n_k = |\alpha|\,|B_k\,(O_k)|.\,Cos\,(\vec{B}_k\,(O_k),\vec{n}_k) \qquad (5)'$$

avec

$$\alpha = -\,j\,\frac{A_k\,\omega}{R_k + j\,L_k\,\omega} \qquad (6)'$$

En considérant un repère radial $\vec{u}_\rho,\vec{u}_\theta,\vec{u}_\phi$ centré au point $O_c$, centre du capteur, comme l'illustre la figure 5,

avec

$\vec{u}_\rho = \dfrac{\overrightarrow{O_k\ O_c}}{|\overrightarrow{O_k\ Oc}|}$, $\vec{u}\theta$ et $\vec{u}\phi$ étant deux autres vecteurs unitaires tels que $\vec{u}_\rho, \vec{u}_\theta, \vec{u}_\phi$ forment un repère $(u_k)$orthonormé direct avec $\vec{u}_0$ dans le plan $(\vec{u}_\rho, \vec{n}_k)$, le vecteur champ $(\vec{B}_{Pk})_{uk}$ crée par la spire $SP_k$ s'exprime dans le repère radial $\vec{u}_\rho, \vec{u}_\theta, \vec{u}_\phi$ par trois composantes, une composante $B_\rho$ selon l'axe $\vec{u}_\rho$, une composante $B_\theta$ selon l'axe $\vec{u}_\theta$ et une composante $B_\phi$ selon l'axe $\vec{u}_\phi$. Ce champ $(\vec{B}_{Pk})_{uk}$ modélise la perturbation de la source *k*.

Les lois connues de l'électromagnétisme enseignent que pour $|O_k\ O_c| > r_k$, les composantes $B_\rho$, $B_0$ *et* $B_\phi$ sont données par les relations suivantes :

$$\begin{cases} B_\rho = I\left[\dfrac{\mu_o}{4\pi}\dfrac{2\pi r_k^2}{\rho}\displaystyle\sum_{\ell=o}^{\infty}(-1)^\ell\dfrac{(2\ell+1)!!}{2^\ell(\ell!)}\dfrac{r_k^{2\ell}}{\rho^{2\ell+2}}P_{2\ell+1}\left(Cos\,\theta'_k\right)\right] & (7)' \\ B_\theta = -I\left[\dfrac{\mu_o}{4\pi}\pi r_k^2\displaystyle\sum_{\ell=o}^{\infty}(-1)^\ell\dfrac{(2\ell+1)!!}{2\ell(\ell+1)!}\dfrac{1}{\rho^3}\left(\dfrac{r_k}{\rho}\right)^{2\ell}P^1{}_{2\ell+1}\left(Cos\,\theta'_k\right)\right] & (8)' \\ B_\phi = o & (9)' \end{cases}$$

avec

- $\rho = |\overrightarrow{O_k\ O_c}|$
- $I = |i_k|$
- $\theta'_k = (\vec{n}_k, \vec{u}_\rho), \vec{n}_k = \overrightarrow{O_k\ Z_k}$ sur la figure 5 ;
- $P_\ell^m(x)$ = polynôme de Legendre d'ordre $\ell, m$
- $(k)!! = k(k-2)(k-4)\ x ...\ 5 \times 3 \times 1$, *k* étant impair.

Les expressions pour $\rho < r_k$ ne sont pas données car elles ne modifient pas le modèle final et de plus dans la réalité $\rho > r_k$.

L'expression du champ $(\vec{B}_{Pk})_c$ de la source $S_k$ ou de la spire $SP_k$, exprimée dans le repère *C* du capteur, est donnée par la relation suivante :

$$(B_{Pk})_c = (R_{uk/c})\,(B_{Pk})_{uk} \qquad (10)'$$

où $R_{uk/c}$ est la matrice de passage du repère *C* du capteur, précédemment défini, au repère $u_k = \vec{u}_\rho, \vec{u}_\theta, \vec{u}_\phi$ précédemment défini.

De façon plus générale, si l'on considère un système de trois spires d'axes de symétrie de révolution orthonormés $\vec{n}_x, \vec{n}_y, \vec{n}_z$, définissant par exemple le repère $(S_k)$, le champ résultant au niveau du capteur $O_c$ est la somme des trois champs produits par les spires ci-dessus.

Dans le repère radial $(u_k)$, le champ dû à la source k est :

$$\left(\vec{B}_{Pk}(O_c)\right)_{u_k} = \left[\vec{B}^1_{Pk} + \vec{B}^2_{Pk} + \vec{B}^3_{Pk}\right]_{u_k} \qquad (11)'$$

$\vec{B}^{1,2,3}_{Pk}$ obéissent aux équations (7)', (8)', (9)'.

Dans un premier temps, on supposera pour simplifier l'exposé que $\rho_k = |\overrightarrow{O_k O_c}| >> r_x, r_y, r_z$ rayons des spires. Avec ces hypothèses, les formules (7)', (8)', (9)' donnant les $B^{1,2,3}{}_{Pk}$ ci-dessus se simplifient et s'écrivent de façon connue de l'homme de l'art par :

$$\left(B_{Pk}(O_c)\right)u_k = \frac{1}{\rho_k{}^3}\begin{bmatrix}2 & 0 & 0\\ 0 & -1 & 0\\ 0 & 0 & -1\end{bmatrix}P^t \quad \left[S_x\ I_x\ \vec{n}_x + S_y\ I_y\ \vec{n}_y + S_z\ I_z\ \vec{n}_z\right] \qquad (12)'$$

avec $P = [\vec{u}_\rho\ , \vec{u}_\theta, \vec{u}_\phi]$: matrice de passage du repère ($S_k$), au repère radial ($u_k$).

$S_x = \pi^2{}_{rx}$, $S_y = \pi r^2{}_y$, $S_z = r^2{}_y$. $I_x, I_y, I_z$ sont les courants $I$ des bobines d'axes $\vec{n}_x, \vec{n}_y, \vec{n}_z$. $S_x\ I_x$, $S_y\ I_y$, $S_z\ I_z$ sont respectivement les moments magnétiques d'axes $\vec{n}_x\ \vec{n}_y, \vec{n}_z$.

La matrice $P$ est constante pour la source $k$ puisqu'elle ne dépend que de $\overrightarrow{O_c\ O_k}$, fixe dans le repère ($C$) du capteur ou du repère ($S_k$) de la source.

Dans la relation (12)', les courants $I_x, I_y, I_z$ s'expriment selon les relations (4), (5), (6), soit :

$$\begin{cases} I_x = |\alpha_x|\left|\vec{B}_k(O_k)\right| Cos\left(\theta_x\right)_{Sk} \\ I_y = |\alpha_y|\left|\vec{B}_k(O_k)\right| Cos\left(\theta_y\right)_{Sk} \\ I_z = |\alpha_z|\left|\vec{B}_k(O_k)\right| Cos\left(\theta_z\right)_{Sk} \end{cases} \qquad (13)'$$

Comme l'illustre la figure 6, le vecteur $\vec{B}_k\ (O_k) = \vec{V}_k$ est repéré dans le repère ($S_k$) par deux angles $\phi_k$ *et* $\theta_k$, $\phi_k$ repérant la projection du vecteur $\bar{V}_k$ représentant le champ magnétique dans le plan $O_k$, $X_k$, $Y_k$ *et* $\theta_k$ l'angle du vecteur $\vec{V}_k$, avec $Z_k = \vec{n}_z$.

On prend les conventions suivantes :

$$Cos\ (\theta_z)_{Sk} = Cos\ \theta_k$$

$$Cos(\theta y)_{Sk} = Sin\ \theta_k\ Sin\ \phi_k \qquad (14)'$$

$$Cos(\theta_x)_{Sk} = Sin\ \theta_k\ Cos\ \phi_k$$

En substituant les relations (13)' et (14)' dans la relation (12)', l'expression du champ perturbateur

$$\left(B_{Pk}\,(O_c)\right)_c$$

au point $O_C$, origine du repère $C$ du capteur, exprimé dans ce repère $C$, est obtenue par la relation suivante en utilisant la relation (10)':

$$\vec{B}_{Pk}(O_C) = \left\|\vec{B}_k(O_k)\right\| \left|R_{uk/C}\right| \begin{bmatrix} Sin\ \theta_k \left(a_x\ Cos\ \phi_k + b_x\ Sin\ \phi_k\right) + c_x\ Cos\ \theta_k \\ Sin\ \theta_k \left(a_y\ Cos\ \phi_k + b_y\ Sin\ \phi_k\right) + c_y\ Cos\ \theta_k \\ Sin\ \theta_k \left(a_z\ Cos\ \phi_k + b_z\ Sin\ \phi_k\right) + c_z\ Cos\ \theta_k \end{bmatrix} \quad (15)'$$

$\|\vec{B}Pk(O_k)\|$ étant le module du vecteur $\vec{B}_{Pk}(O_k)$.
$\vec{B}_{Pk}$ étant le champ ambiant au point $O_k$
et $a_x,a_y,a_z,b_x,b_y,b_z,c_x,c_y,c_z$ représentent les coefficients de la matrice

$$\frac{1}{\rho_k^3} \begin{bmatrix} 2 & 0 & 0 \\ 0 & -1 & 0 \\ 0 & 0 & -1 \end{bmatrix} \left[P^t\right] \begin{bmatrix} |\alpha_x|S_x & 0 & 0 \\ 0 & |\alpha_y|S_y & 0 \\ 0 & 0 & |\alpha_z|S_z \end{bmatrix} = \begin{bmatrix} a_x & b_x & c_x \\ a_y & b_y & c_y \\ a_z & b_z & c_z \end{bmatrix}$$

Si l'hypothèse $\rho_k >> \{r_x,r_y,r_z\}$ n'est pas respectée, la matrice

$$\begin{bmatrix} 2 & 0 & 0 \\ 0 & -1 & 0 \\ 0 & 0 & -1 \end{bmatrix}$$

dépend de $\rho_k$ et de $\theta'_k$ *et* $\phi'_k$ définissant les coordonnées de $\overrightarrow{O_c\ O_k}$, selon les formules (7)', (8)', (9)' que l'homme du métier saurait appliquer.

Quoi qu'il en soit, cette matrice reste constante pour la source $S_k$. Ainsi l'hypothèse simplificatrice ne change rien à la formule (15)' du champ perturbateur.

L'expression du champ $\vec{B}_{Pk}$ $(O_c)$ dans le repère capteur est du même type que celui exprimé dans le repère $(u_k)$, seuls les coefficients $a_x,a_y,a_z,b_x,b_y,b_z,c_x,c_y,c_z$ seraient modifiés dans le modèle.

Les coefficients sont identifiés dans le repère capteur (C) par exemple.

La formule (15)' montre en fait que chaque composante du modèle de la perturbation, le vecteur $B_{Pk}$, s'écrit comme le développement limité à l'ordre 1 des parties réelles et imaginaires de la fonction complexe de Legendre associée définie par :

$$Z_{l,m}(\theta,\phi) = \sum_{\ell=1}^{L} \sum_{m=o}^{\ell} \sqrt{\frac{2\ell+1}{4\pi} \frac{(\ell-m)!}{(\ell+m)!}}\ P_\ell^m(Cos\ \theta)\, e^{jm\phi} \quad (16)'$$

avec $e^{jm\phi} = Cos\ m\ \phi + j\ Sin\ m\ \phi$

(17)'

A l'ordre 1, $L = 1$ *et* $m = o$ *et* $m = 1$.

De façon plus générale, les calculs et expériences réalisés par la Déposante ont montré qu'il est possible d'adopter pour chaque composante du vecteur champ $B_{Pk}$, modèle de la source $S_k$, exprimée dans le repère $C$ du capteur, la définition suivante :

$$\left(B_{Pk}\left(O_C\right)\right)_i = \left|\vec{V}_k\right| \sum_{\ell=1}^{L_k} \sum_{m=o}^{\ell} P_\ell^m\left(Cos\ \theta_k\right)\left[A_{\ell,m,i}^k\ Cos\left(m\ \phi_k\right) + C_{\ell,m,i}^k\ Sin\left(m\ \phi_k\right)\right] \quad (18)'$$

Dans cette formule, $\theta_k$ est l'angle de $\vec{V}_k$ avec l'axe $\vec{O}_z$ du capteur, et $\phi_k$ repère dans le plan $O_c\ X_c\ Z_c$ de ce même capteur la projection de $\vec{V}_k$ par rapport à $\overrightarrow{O_c\ X_c}$ selon la figure 6.

$L_k$ est l'ordre du développement du polynôme de Legendre relatif à la source $k$.

Cette nouvelle définition ne change rien aux hypothèses précédentes puisque le repère ($S_k$) a été supposé quelconque. On peut dans ce cas le considérer confondu avec le repère capteur ($C$).

- $(B_{Pk}(O_c))_i$ étant la ième composante du vecteur $(B_{Pk}(O_c))$, $i = 1, 2, 3$, cette composante est produite par trois spires de modélisation de la source $S_k$ ;
- $A_{\ell,m,i}^k$, et $C_{\ell,m,i}^k$ étant des constantes à identifier pour la source $k$.

Ce modèle (18)' tient compte du fait que le modèle par 3 spires filiformes (15)' est une vue simplifiée des phénomènes physiques réels. En fait, il faut parler plutôt de pseudo-spires qui correspondent aux lignes de courants circulant dans les éléments conducteurs.

On vient d'établir le modèle (18)' de la perturbation et on constate qu'il dépend notamment, et de façon explicite, de $\vec{B}_{Pk}$ ($O_k$), c'est à dire du champ extérieur au point $O_k$, centre de la source $k$.

Ce champ est supposé connu :

- lors de l'identification du modèle, ce champ est le champ $B_E$ émis en espace libre par l'émetteur ;
- en utilisation, dans un champ ambiant quelconque, par exemple dans une cabine d'aéronef, c'est le champ émis par l'émetteur $B_E$ auquel s'ajoute éventuellement le champ perturbateur de la cabine.

Dans la première étape de l'invention qui consiste à déterminer les coefficients inconnus du modèle (18), le champ ambiant $B_E$ émis par l'émetteur est connu selon par exemple une méthode enseignée dans le brevet français n° 90.08230 : la mesure du champ $\vec{B}c$ ($O_c$) résultant de l'émission de chacune des trois bobines d'émission permet selon cette méthode de fournir une valeur très proche de la position du centre du capteur ($X_c$,$Y_c$,$Z_c$) dans le repère ($E$) de l'émetteur ou le repère de référence Ref lorsqu'on fait subir au casque des rotations et des translations.

Connaissant une estimation de $X_c$,$Y_c$,$Z_c$, on en déduit la valeur du champ ambiant $\vec{B}_E$ au centre du capteur.

On exprime ensuite le champ $\vec{V}_k = \vec{B}_k\ (\vec{O}_k)$ en fonction des coordonnées de $O_k$ dans le repère de référence :

$$\overrightarrow{O_R\ O_k} = \overrightarrow{O_R\ O_c} + \overrightarrow{O_c\ O_k}$$

$$\text{où } \left(\overrightarrow{O_c\ O_k}\right) = R_{c/\mathrm{Ref}} \cdot \left(\overrightarrow{O_c\ O_k}\right)_c$$

$$= ROT\ .\left(\bar{p}\right)_c$$

$$. (\vec{\rho})_c = \left( \overrightarrow{O_c O_k} \right)_c$$

est constant dans le repère capteur ou dans le repère ($S_k$).

. *ROT* est la rotation du casque égale à $R_{c/\mathrm{Ref}}$ matrice de passage du repère de référence Ref au repère capteur ($C$).

Dans la phase d'identification du modèle, *ROT* est connue, on en déduit les coordonnées de la source $k$ dans le repère de référence (Ref) en fonction des coordonnées $\vec{X}'_k$ de la source dans le repère capteur, inconnues qu'il s'agit d'identifier au cours de cette première étape de l'invention.

Les coordonnées de la source $k$ dans le repère de référence s'expriment par

$$\vec{X}_k = \vec{X}_c + \mathrm{ROT.}\ (\vec{\rho})_c$$

ou encore

$$\vec{X}_k = \vec{X}c + ROT.(\vec{X}'_k)$$

En phase d'identification, *ROT* est la rotation connue du casque, ($\vec{X}_c$), coordonnées du centre du capteur dans le repère de référence, sont connues par exemple de façon approchée par le procédé du brevet français 90.08230. On veut identifier 3 composantes de $\vec{X}'_k = (\rho)_c$ . On en déduit

$$\left(\bar{B}_k(O_k)\right)_c = ROT^{-1} . \left[B_E\left(\vec{X}_k\right)\right]_{\mathrm{Ref}}$$

que l'on substitue dans la formule (18)'.

Après plusieurs itérations sur $\vec{X}'_k$ et sur les $A^k_{\ell,m,i}$ et $C^k_{\ell,m,i}$ l'estimation de $X_k$ devient meilleure et les valeurs des paramètres du modèle c'est-à-dire les composantes $(X_c)_{1,2,3}$ du vecteur $\vec{X}_c$ et les ($A^k_{\ell,m,i}$; $C^k_{\ell,m,i}$) convergent vers leur vraie valeur.

La convergence est acquise lorsque le champ total mesuré par le capteur et son modèle (1)' sont sensiblement égaux en tout point de l'espace, c'est-à-dire lorsque ($\vec{X}'_k$), $A^k_{\ell,m,i}$ et $C^k_{\ell,m,i}$ minimisent l'écart quadratique moyen entre mesure et champ modélisé selon les relations (1)' et (18)'.

Le modèle doit être réidentifié pour chaque champ $B_E$ émis par chaque bobine de l'émetteur, les bobines d'émission étant au nombre de trois par exemple. Ces champs sont émis séquentiellement ou non. Ils sont par exemple linéairement indépendants, c'est le cas notamment si les bobines d'émission sont quasi-orthogonales.

Dans le cas d'un émetteur à trois bobines, il y a donc 9 termes du type de la relation (18)' à définir, trois composantes d'espace du vecteur $B_k$ étant définies pour les trois bobines d'émission. Cela est à réaliser pour toutes les sources de perturbation, $k$ variant de 1 à $NS, NS$ étant le nombre total de ces sources.

Ainsi, pour l'identification du modèle de chaque source $S_k$, il s'agit d'identifier en fait les coefficients $A^k_{\ell,m,i}$ et $C^k_{\ell,m,i}$ de la relation (18)', pour les trois bobines d'émission ainsi que les coordonnées ($X'_k$) du centre $O_k$ de la source $S_k$. Les coefficients $A^k_{\ell,m,i}$ et $C^k_{\ell,m,i}$ et ($X'_k$) sont par exemple des paramètres représentatifs du casque et de la source $S_k$ pour un casque donné. Il est possible de placer le support liant rigidement le capteur $C$ et la source de perturbation $S_k$, c'est à dire le casque, dans le champ des bobines d'émission et d'effectuer des translations et des rotations du casque. Connaissant au préalable le champ, ou son modèle, émis par les bobines, il est possible par exemple de mesurer par différence la perturbation et d'identifier par une méthode classique itérative les paramètres ($X'_k$), $A^k_{\ell,m,i}$ et $C^k_{\ell,m,i}$ qui minimisent l'écart quadratique moyen entre la mesure et le champ préalablement connu ou son modèle. Cette opération, peut par exemple être réalisée en usine, de façon définitive. Les paramètres ($X'_k$) $A^k_{\ell,m,i}$ et $C^k_{\ell,m,i}$ sont par exemple mémorisés dans un circuit 8 résident sur le casque, ce circuit pouvant être une mémoire de type PROM, EPROM, EEPROM notamment. L'identification de ces paramètres $A^k_{\ell,m,i}$ et $C^k_{\ell,m,i}$ et leur mémorisation dans les casques permet de rendre ceux-ci facilement interchangeables.

Une autre sous-étape suivante 33 consiste en la modélisation d'une cabine n° $\ell$, avec des mesures dans

cette cabine équipée d'un outillage de cartographie, d'un capteur n° i", et d'un émetteur n°j".

Avant de décrire, par un exemple de réalisation, cette sous-étape 33, on peut rappeler que l'on cherche à connaître avec précision le champ perturbateur induit par l'ensemble des conducteurs de la cabine sous l'effet d'un champ inducteur appelé $B_0$ $(x\ y\ z)$ connu dans le repère de l'émetteur.

Le volume balayé par le capteur est intérieur à la cabine et ne contient pas de sources de courants.

Pour identifier le modèle du champ perturbateur induit ci-dessus, appelé $B_1$ $(x, y, z)$, on connaît un certain nombre de mesures du champ total $[B_O(x\ y\ z) + B_1(x\ y\ z)]$ mesuré en des points $(x_m y_m z_m)$ du volume, m = 1, M, correspondant au centre du capteur d'orientation noté par sa matrice de rotation $R_{C/M}$ par rapport à un repère mécanique de référence.

Ces points de mesure s'obtiennent par des translations connues dans un repère mécanique d'un outillage portant le capteur et par des rotations de ce même outillage connues dans le repère de référence

$$(R_{C/CO})_M \cdot (R_{C/M})_n = (R_{C/CO})_M\,(R_{CO/M})_M . \qquad (C1)$$

La notation *CO* correspond à l'orientation du capteur lorsque la rotation de l'outil est nulle

$$\left( C'est\ \grave{a}\ dire\ \ R_{CO/CO} \overset{\Delta}{=} I \right)$$

(I étant la matrice identité).

A partir de ces mesures, on identifie les paramètres inconnus du modèle connaissant à une translation et une rotation près les coordonnées et les orientations du capteur en chaque point de mesure.

Puisque le problème est du type magnétostatique, les deux équations de base sont les suivantes :

$$\nabla . B = 0 \qquad \nabla \times H = J \qquad (C2)$$

ou encore

$$div\ B = 0 \qquad rot\ H = J$$

Puisque dans le volume d'intérêt, c'est à dire le volume débattu par le capteur, la densité de courant $J_{(x\ y\ z)}$ est nulle, les équations se réduisent à $V\ x\ H = 0$ avec la condition $V - B = 0$.

Puisque $\nabla\ x\ H = 0$, $H$ dérive d'un potentiel scalaire $\phi_1$ $(x\ y\ z)$ : $H = -\nabla \phi_1$.
Il vient également la relation $B = \mu_o H$.

La relation sur le potentiel s'écrit :

$$\nabla \mu_o\ \nabla \phi_1 = o \Rightarrow \nabla^2\ \phi_1 = O \qquad (C3)$$

Cela est l'équation de Laplace bien connue.

Or, les solutions de l'équation de Laplace sont bien connues : ce sont des fonctions harmoniques

- pour un volume parallèlépipédique dont les côtés sont de longueur a, b, c, on choisit des coordonnées rectangulaires et les fonctions sont du type :

$$\phi(x\ y\ z) = \sum_{n,m=1}^{\infty} A_{n\,m}\,Sin\,(\alpha_n\,x + \theta_{x\,n}\,Sin\,(\beta_m\,y + \theta_{y\,n})\,Sin\,h\,(\gamma_{n\,m}\,z + \theta_{z\,n\,m})$$

Les paramètres $A_{nm}$, $\theta_{xn}$, $\theta_{yn}$, $\theta_{ynm}$, $\alpha_n$, $\beta_m$, $\gamma_{nm}$, sont identifiés grâce à la connaissance du champ mesuré en des points $(x\ y\ z)_{capteur}$ pour lesquels on a :

$$\left[B_{(x\,y\,z)_{capteur}}\right]_{mesure} = -\mu.\nabla\,\phi_{(x\,y\,z)}. \quad (C5)$$

et sachant que

$$\alpha_n = \frac{n\,\pi}{\alpha},\ \beta_m = \frac{m\,\pi}{b}\ \gamma_{nm} = \pi\sqrt{\frac{n^2}{a^2} + \frac{m^2}{b^2}} \qquad (C6)$$

- pour un volume sphérique pour lequel on choisirait un système de coordonnées sphérique (ρ,θ,φ), la solution générale est fondée sur la série de fonctions associées de Legendre :

$$\phi(\rho,\theta,\varphi) = \sum_{\ell=o}^{\infty}\ \sum_{m=--\ell}^{\ell}\left[A_{\ell,m}\,\rho^{\ell} + B_{\ell,m}\,\rho^{-(\ell+1)}\right]Y_{\ell,m}(\theta,\varphi)$$

où les fonctions harmoniques sphériques $Y_{\ell,m}$ (θ, ϕ) sont définies par

$$x = \rho\cos\theta\cos\varphi\ ;\ y = \rho\cos\theta\sin\varphi\ ;\ z = +\rho\sin\theta \qquad (C7)$$

$$Y_{\ell,m}(\theta,\varphi) = \sqrt{\frac{2\ell+1}{4\pi}\,\frac{(\ell-m)!}{(\ell+m)!}}\,P^{m}{}_{\ell}(\cos\theta)e^{im\varphi} \qquad (C8)$$

et où

$$P_{\ell}^{m}(x) = (-1)^{m}\left(1-x^{2}\right)^{m/2}\frac{d^{m}}{d\,n^{m}}\,P_{\ell}(x) \qquad (9)$$

avec $P_\ell$ (x): Polynôme de Legendre d'ordre $\ell$.

Souvent $\ell$, m sont des entiers positifs. Mais, on peut très bien, sans changer la méthode, utiliser des solutions plus générales : fonction de Legendre de première espèce et d'ordre y non entier déterminé par les conditions aux limites. La fonction $Y_{\ell,m}$ *devient* $Y_{\gamma,\,v}$ *où* γ *et v* sont fractionnaires.

L'identification des coefficients se fait comme décrit par la suite.

De la même façon que précédemment, les coefficients $A_{\ell,m}$, $B_{\ell,m}$ qui sont des nombres complexes sont déterminés par la minimisation d'un critère de distance (moindres carrés) du type :

$$\varepsilon^{2} = MIN\ de \sum_{i=1}^{M}\left[\nabla.\left[\sum_{\ell=o}^{L}\ \sum_{m=-\ell}^{\ell}\left[A_{\ell,m}\,\rho_i^{\ell} + B_{\ell,m}\,\rho_i^{-(\ell+1)}\right]\right]Y_{\ell,m}(\theta\varphi)_i\right.$$

$$\left.-\left[B_{(\rho,\theta,\varphi)_{i_{capteur}}}\right]_{mesuré}\right]^{2} \qquad (C10)$$

avec

$$\left[B(\rho,\theta,\varphi)_{i_{capteur}}\right]_{mesuré} = \frac{1}{k_{CR}}\left[K_C H_C\right]^{-1}\left[M\right]_i\left[H_R K_R\right]^{-1} \equiv \left[B_C\right]_i$$

M : nombre de mesures

$[M]_i$ : matrice de mesure à l'instant i.

L : ordre du polynôme de Legendre. et

$\vec{\nabla}\phi = \vec{e}_1 \frac{\partial\phi}{\partial\rho} + \vec{e}_2 \frac{1}{\rho}\frac{\partial\phi}{\partial\theta} + \vec{e}_3 \frac{1}{\rho \sin\theta}\frac{\partial\phi}{\partial\varphi}$ (C11) $\vec{e}_1, \vec{e}_2, \vec{e}_3$ sont les vecteurs unitaires de $\overrightarrow{O_R O_c}$ et des 2 vecteurs formant un trièdre direct.

L'ordre du modèle est déterminé par tâtonnement jusqu'à ce que l'erreur $\varepsilon^2$ soit suffisamment faible. En fait, l'ordre dépend de l'erreur de la ligne de visée $\delta T$ qui doit être inférieure à une certaine valeur dans 95 % des cas.
L'erreur de la ligne de visée est assimilée à l'erreur de rotation du capteur comme cela sera vu par la suite.
Deux possibilités existent pour identifier les coefficients du modèle dans la cabine :

- la première consiste à identifier par le modèle (C7) l'ensemble des champs $B_{(xyz)} = B_0\,(xyz) + B_1\,(xyz)$.

Cette méthode donne des résultats corrects

- la seconde qui sera précisée ci-après consiste à identifier le seul champ $B_1(x\ y\ z)$.

On opère en deux phases :

- Le champ $B_0\,(x\ y\ z)$ est identifié comme un espace libre en utilisant la mesure du capteur contenant $B_0 + B_1$. En fait, on identifie les paramètres de $B_0$. Cette solution fonctionne dans des zones plutôt proches de l'émetteur, $B_1 \ll B_0$.

Les paramètres $R_{CO/M}$, $\vec{X}_{OE/M}$, $R_{E/M}$ donnant respectivement l'orientation du capteur dans le repère mécanique et la position et l'orientation de l'émetteur dans le même repère sont correctement identifiés dans les cockpits d'avions ou d'hélicoptères, cela bien que non évident, a été vérifié par les résultats obtenus par la Demanderesse.

- De même de la mesure corrigée $[B_C]$, on retire le modèle $B_0$ précédemment identifié pour obtenir l'estimée de $B_1$ :

$$\left[\hat{B}_1\ x\ y\ z\right]_{mesuré} = \left[B_C\right] - \left[\hat{B}_o\left(x\ y\ z\right)\right] \qquad (C12)$$

Les coefficients $A_{\ell,m}, B_{\ell,m}$ du modèle sont estimés en remplaçant

$$\left[B(\rho,\theta,\varphi)_{i\ capteur}\right]_{mesuré}$$

de (C10) par ($B_1$ ($x$,$y$,$z$)) estimé de (C12).
Cette solution est préférée à la première parce que les positions et orientation de l'émetteur sont connues dans le repère du porteur. Il est ainsi possible d'en tenir compte lors de changements d'émetteurs puisque ces paramètres sont mémorisés dans les mémoires 9 liés à l'émetteur.
La première étape du procédé selon l'invention comprend une dernière sous-étape 34 de génération d'un modèle global B, somme des deux modèles $B_0, B_1$ identifiés indépendamment et à partir duquel des coefficients globaux

du type de ceux identifiés selon le procédé du brevet français 90.08230 sont obtenus, c'est-à-dire un modèle polynominal linéaire par rapport aux variables d'entrée représentatives des coefficients du champ global B, obtenu par une phase d'identification 341, selon par exemple le procédé du brevet français 90 08230.

Les coefficients sont placés dans une mémoire 35 appelée mémoire équipement.

La figure 7 illustre la deuxième étape du procédé selon l'invention, étape de la position et de l'orientation du capteur en fonctionnement opérationnel effectués dans une première phase 71.

A partir de la mesure des 3 champs émis par les 3 axes du capteur, c'est à dire des 9 mesures effectuées dans une première sous-étape 71, à l'instant courant m, on doit déterminer la position et l'orientation du capteur et en déduire l'orientation de la ligne de visée dans le repère de l'aéronef.

Pour cela, on dispose, comme le montre la figure 7, outre les 9 mesures de $[M]_C$, les paramètres des modèles :

- espace libre : $(A_0)_{i,j}$ relatifs au capteur i et à l'émetteur j mémorisés dans la mémoire capteur 7 n° i et dans la mémoire émetteur 9 n° j
- cabine : $(\vec{A}1)_\ell$ relatifs à la cabine I, mémorisés dans la mémoire cabine 14 n° $\ell$.
- casque : $(\vec{A}_2)_k$ relatifs au casque k, mémorisés dans la mémoire casque n° k.

Ces paramètres ont été obtenus dans la première étape illustrée par la figure 3. On dispose par ailleurs, grâce à la mémoire équipement 35 du modèle du champ global approché de $(B_0+B_1)$ grâce à

$$(\vec{A}_{MK1}).$$

Le problème revient à trouver le vecteur $v$, défini précédemment, dont les composantes sont la position et l'orientation du capteur et qui permettent de trouver une distance euclidienne minimum entre modèle fonction de $\vec{v}$ et mesure courante corrigée $[B_C]$.

La mesure courante corrigée $[B_C]$ est obtenue dans une deuxième sous-étape 72 de correction des antennes du capteur et de l'émetteur à partir des coefficients stockés dans leurs mémoires associées 7, 9 et des mesures de la première sous-étape 71.

Le principe consiste à ensuite, dans une troisième sous-étape 73, déterminer le vecteur $\vec{v}$ optimal par une méthode d'optimisation non linéaire.

Il s'agit de déterminer les composantes de $v$ qui minimisent un critère C de distance euclidienne entre la mesure corrigée $[B_C]$ et le modèle de cette mesure

$$C=\sum_{j=1}^{9}\left\{[B_C]-[ROT]^t\left[B_o(\bar{X}_c)\right]-\left[B_2(Rot,X_x)\right]\right\}_j^2$$

pour le casque
en espace libre

$$C=\sum_{j=1}^{9}\left\{[B_C]-[ROT]^t\left[\left[B_o(\bar{X}_c)\right]-\left[B_1(\bar{X}_c)\right]\right]+\left[B_2(\bar{X}_c)\right]\right\}_j^2$$

pour le casque
en espace perturbé

j est l'indice des composantes des matrices $[B_C]$,$[B_0]$ *et* $[B_2]$ $[B_2]$ exprimé dans (C) comme $[B_C]$

9 étant le nombre de composantes de ces matrices.

La principale contrainte à cette méthode itérative est le temps de convergence. L'optimum doit être trouvé dans un temps fixé à l'avance garantissant le temps réel, par exemple (à 100 Hz, on doit fournir l'information $\vec{v}$ de

Position/Orientation.

Pour garantir un temps faible de convergence il faut aussi s'assurer qu'à chaque nouveau cycle de calcul, toutes le 10 ms par exemple, la valeur initiale de $v$ doit être très proche de l'optimum. Cela suppose qu'aucune perte de la position/orientation ne puisse arriver suite à des coupures dans les mesures.

Pour garantir d'avoir à chaque cycle la bonne position/orientation initiale, on utilise par exemple la méthode dite MK1 du brevet 90 08230 pour initialiser $\vec{v}$ (position/orientation) ou tout autre modèle polynominal donnant la position et l'orientation du capteur par une combinaison linéaire des valeurs définies par la position captée.

On a montré dans la première étape comment les coefficients $\vec{A}_{MK1}$ du modèle MK1 ont été identifiés. Ces coefficients sont par exemple stockés dans la mémoire équipement 35.

La figure 8 illustre la troisième sous-étape 73 en montrant les différentes phases de la détermination de $\vec{v}_m$ à partir de $[B_C]_m$ à l'instant m.

La sous-étape 73 se décompose en une phase d'initialisation et une phase d'optimisation non linéaire 74 permettant de déterminer en un minimum de temps la position et l'orientation du capteur.

Une première approximation $\vec{v}_1$ est par exemple fournie à partir d'un modèle MK1 représentatif d'un ensemble moyen ou standard (antennes et cabines), sachant que cette méthode de détermination de $\vec{v}$ n'est pas itérative en vertu de la linéarité du modèle.

Un autre modèle de type polynominal pourrait être utilisé à base d'éléments finis par exemple.

Cette première identification permet de calculer un modèle approché du champ $B_2$ : $[\vec{B}_2]_m$ que l'on retranche au champ mesuré corrigé $[B_C]_m$.

Le modèle du champ $B_2$ calculé est par exemple celui défini par les coefficients obtenus dans la sous-étape 32 de la première étape de modélisation relative au modèle du casque.

La méthode itérative qui permet de déterminer $\hat{\hat{v}}_m$ à partir dE

$$\left(\hat{\hat{v}}_2\right)_m$$

fondée sur la minimisation d'un critère C peut répondre par exemple à l'équation suivante :

$$v^{Min}\, C = v^{Min} \sum_{j=1}^{9} \left\{ [B_C]_m^{(j)} - R\hat{O}T^{-1} \left[ B_o^j\left(\hat{\hat{X}}_C\right) + B_1^j\left(\hat{\hat{X}}_C\right) + B_2^j\left( R\hat{O}T, \hat{\hat{X}}_C \right) \right] \right\}$$

$R\hat{O}T^{-1} \neq R\hat{O}T^t$, 9 étant le nombre de composantes mesurées à chaque instant m, j est l'indice de chaque terme des matrices $B_C, B_0, B_1, B_2$ ($j$ = *1 à 9*) estimées par leur modèle.

A partir de l'orientation du capteur $R\hat{O}T$, on détermine l'orientation de la ligne de visée LV qui est un vecteur fixe lié au capteur.

Le modèle $B_2$ peut recouvrir également, outre les effets dus à des courants de Foucault, des effets purement magnétiques de type fer doux, relatifs par exemple à une aimantation ferromagnétique.

L'invention a été décrite pour une application à la détermination de la position et de l'orientation de la ligne de visée d'un casque dans une cabine d'aéronef. Elle peut cependant être appliquée à tous systèmes mobiles dans un environnement électromagnétique.

Dans un cas d'application à un viseur de casque, les antennes et le casque sont modélisés indépendamment les uns des autres et de la cabine de pilotage, cette modélisation ayant lieu par exemple en usine. Tous les sous-ensembles de l'équipement sont interchangeables, de même que les cabines, tous ces éléments possédant leur propre modèle.

## Revendications

1. Procédé de détermination d'une position et d'une orientation d'un système mobile ($L_V$) par rapport à un émetteur (1) de champ électromagnétique, le système mobile placé dans un porteur étant lié à un capteur (2) de champ magnétique, comportant :

   - une première étape de modélisation analytique des champs électromagnétiques en fonction des coordonnées

du capteur (2), un premier champ ($B_0$) étant créé par l'émetteur (1), un deuxième champ ($B_1$) étant créé par les courants électriques induits dans le porteur par le premier champ ($B_0$) et un troisième champ ($B_2$) étant créé par les courants électriques ou des aimantations induits dans le système mobile par les deux premiers champs ($B_0$+$B_1$), l'effet électromagnétique de chaque champ ($B_0$,$B_1$,$B_2$) étant caractérisée indépendamment des effets des autres champs par les coefficients de son propre modèle ;

- une deuxième étape de calcul, en temps réel, de la position et de l'orientation du capteur en utilisant la mesure courante du champ électromagnétique au niveau du capteur (2) et en utilisant les modèles ($B_0$,$B_1$,$B_2$) de la première étape, la position et l'orientation du capteur étant définie à partir du champ mesuré corrigé ($B_C$), caractérisé en ce qu'il associe un modèle polynominal (B) exprimant globalement et de façon approchée la position/orientation du système et un modèle des champs ($B_0$,$B_1$,$B_2$) non linéaire par rapport à la position/orientation du capteur, le premier modèle permettant une résolution approchée non itérative et le second modèle utilisant les valeurs approchées de cette résolution pour identifier plus précisément la position/orientation en un temps très court par une méthode itérative de résolution d'un critère non linéaire.

**2.** Procédé selon la revendication 1, caractérisé en ce que les champs électromagnétiques ($B_0$,$B_1$,$B_2$) relatifs aux trois sources différentes sont caractérisés séparément des effets des autres champs par identification de leurs paramètres

$$\left(\vec{A}_0,\vec{A}_1,\vec{A}_2\right).$$

**3.** Procédé selon l'une quelconque des revendications précédentes, caractérisé en ce que les paramètres

$$\left(\vec{A}_0\right)$$

du modèle des effets du premier champ ($B_0$) sont stockés dans une mémoire associée à l'émetteur (1) et au capteur (2), les paramètres

$$\left(\vec{A}_1\right)$$

du modèle des effets du deuxième champ ($B_1$) dans une mémoire liée au porteur et les paramètres

$$\left(\vec{A}_2\right)$$

du modèle des effets du troisième champ ($B_2$) dans une mémoire associée au casque (2).

**4.** Procédé selon l'une quelconque des revendications précédentes, caractérisé en ce que les coefficients

$$\left(\vec{A}_{MK1}\right)$$

d'un modèle global générique sont stockés dans une mémoire (35).

**5.** Procédé selon l'une quelconque des revendications précédentes, caractérisé en ce que la première étape comporte une première sous-étape (31) de détermination des coefficients du modèle des effets d'un capteur et d'un émetteur, en espace libre, sans perturbation.

**6.** Procédé selon la revendication 5, caractérisé en ce que le modèle en espace libre est obtenu de la façon suivante :

♦ A chaque émission, on dispose des trois composantes du champ émis, soient les trois vecteurs :
$\vec{M}_1$, $\vec{M}_2$, $\vec{M}_3$
que l'on regroupe en une matrice de mesure

$$[M]=\left[\vec{M}_1,\vec{M}_2,\vec{M}_3\right].$$

- L'objet du modèle $B_0$ en espace libre est d'identifier l'ensemble des paramètres dont dépend ce modèle, à savoir :

  + les coordonnées angulaires $R_{E/Ref}$ et de position $\vec{X}_E$ de l'émetteur dans un repère de référence définies par la matrice de passage du repère de référence (Ref) au repère de l'émetteur (E) ;
  + les coordonnées angulaires du capteur dans un repère de référence définies par la matrice $R_{CO/R}$ lorsque l'outil c'est-à-dire le support du capteur est en position angulaire de référence ;
  + les matrices de correction de facteur d'échelle et de couplage de l'émetteur $[H_R\ k_R]$ et du capteur $[H_C\ K_C]$;
  + le gain global émetteur capteur : $K_{CR.}$

**7.** Procédé selon l'une quelconque des revendications précédentes, caractérisé en ce que la première étape comporte une sous-étape (32) de modélisation en espace libre du système mobile équipé avec un capteur (2) et comprenant des matériaux perturbateurs du champ.

**8.** Procédé selon la revendication 7, caractérisé en ce que des sources de perturbation ($S_1$,$S_2$,$S_3$,....$S_k$) étant liées au capteur (*C*), la sous-étape (32) consiste dans une première phase, les sources ($S_1$,$S_2$,$S_3$,....$S_k$) étant plongées dans un champ magnétique ambiant quelconque donné, à exprimer la perturbation causée par chaque source comme une fonction explicite du champ magnétique moyen existant au niveau de la source pour créer un modèle représentatif de sa perturbation au centre du capteur (*C*), dans une deuxième phase, le capteur étant plongé dans le champ magnétique à mesurer, à déterminer la perturbation causée par chaque source à l'aide de son modèle et du champ magnétique moyen existant à son niveau, dans une troisième phase à sommer les perturbations dues aux sources ($S_1$,$S_2$,$S_3$,....$S_k$) et dans une quatrième phase à retrancher cette somme à la mesure effectuée par le capteur (*C*), chaque source ($S_k$) étant modélisée par au moins une spire équivalente ($S_{Pk}$), les variations du champ ambiant ($B_k$) au niveau de la spire équivalente créant un courant ($i_k$) dans la spire, lequel produit un champ de perturbation.

**9.** Procédé selon la revendication 8, caractérisé en ce que la perturbation causée par une source ($S_k$) est modélisée par un vecteur champ magnétique

$$\left(\vec{B}_{Pk}(O_C)\right)$$

au niveau du capteur (*C*), ce champ étant exprimé de la façon suivante pour chaque composante :

$$\left(B_{Pk}\left(O_C\right)\right)_\ell=\left|\vec{B}_k\left(O_k\right)\right|\sum_{\ell=1}^{L_k}\sum_{m=o}^{\ell}P_\ell^m\left(Cos\theta_k\right)\left[A_{\ell,m,i}^k\,Cos\left(m\phi_k\right)+C_{\ell,m,i}^k.Sin\left(m\phi_k\right)\right]$$

- $(B_{Pk}(O_C))_\ell$ étant la ième composante du vecteur

$$\left(\vec{B}_{Pk}(O_C)\right)$$

au centre du capteur (*C*) est produite par au moins une spire de modélisation de la source ($S_k$), i = 1, 2, 3 ;
-$\vec{B}_k(O_k)$ étant le vecteur champ ambiant au point $O_k$ centre de la source k et $|\vec{B}_k(O_k)|$ son module.

- $\theta_k$ étant l'angle entre un axe $\overrightarrow{O_c\,Z_c}$ du repère capteur (*C*) et le vecteur champ magnétique $B_k(O_k)$ au centre $O_k$ de la spire ;

- $\phi_k$ étant l'angle entre un axe $\overrightarrow{O_c\,X_c}$ du repère capteur et la projection du vecteur champ magnétique précité

$B_k(O_k)$ sur le plan défini par les axes $\overrightarrow{O_c X_c}$ et $\overrightarrow{O_c Y_c}$, $(O_c,X_c,Y_c,Z_c)$ étant le repère du capteur.

- $P^m{}_\ell(x)$ étant un polynôme de Legendre d'ordre $\ell$, m défini par 0

$$P_\ell^m(x)=\frac{(-1)^m(1-x^2)^{m/2}}{2^\ell \ell!}\frac{d^{\ell+m}}{dx^{\ell+m}}(x^2-1)^\ell$$

- $A^k{}_{\ell,m,i}$ *et* $C^k{}_{\ell,m,i}$ étant des constantes.

**10.** Procédé selon l'une quelconque des revendications précédentes, caractérisé en ce que la première étape comporte une sous-étape (33) de modélisation du porteur par des mesures dans ce dernier, le porteur étant équipé d'un outillage de cartographie, d'un capteur et d'un émetteur.

**11.** Procédé selon la revendication 10, caractérisé en ce qu'à partir des mesures, on identifie les coefficients inconnus du modèle ($B_1$) connaissant à une translation et une rotation près les coordonnées et les orientations du capteur en chaque point de mesure.

**12.** Procédé selon la revendication 7, caractérisé en ce que l'identification des coefficients $(A_{\ell,m},B_{\ell,m})$ du modèle de $(B_1)$se fait par la minimisation d'un critère de distance du type des moindres carrés :

$$\varepsilon^2=MIN\,de\sum_{i=1}^{M}\left[\nabla\left[\sum_{\ell=o}^{L}\sum_{m=-\ell}^{\ell}\left[A_{\ell,m}\rho_i^\ell+B_{\ell,m}\rho_i^{-(\ell+1)}\right]\right]Y_{\ell,m}(\theta\varphi)_i\right]-\left[B_{(C,\theta,\varphi)_i}\quad\right]\quad]^2$$

avec

M: nombre de mesures

L : ordre du polynôme de Legendre.

Le gradient du scalaire $\phi(\rho,\theta,\varphi)$ s'écrivant :

$$\vec{\nabla}\phi=\vec{e}_1\frac{\partial\phi}{\partial\rho}+\vec{e}_2\frac{1}{\rho}\frac{\partial\phi}{\theta}+\vec{e}_3\frac{1}{\rho\sin\theta}\frac{\partial\phi}{\partial\varphi}\qquad (C11)$$

L'ordre du modèle est déterminé par tâtonnement jusqu'à ce que l'erreur $\varepsilon^2$ soit suffisamment faible.

**13.** Procédé selon l'une quelconque des revendications précédentes, caractérisé en ce que la première étape comprend une dernière sous-étape (34) de génération d'un modèle global (B), somme des deux modèles $(B_0,B_1)$ identifiés indépendamment.

**14.** Procédé selon la revendication 13, caractérisé en ce que le modèle global (B) est un modèle polynominal.

**15.** Procédé selon l'une quelconque des revendications précédentes, caractérisé en ce que la deuxième étape comprend une première sous-étape (71) de mesures des champs émis, une deuxième sous-étape (72) de correction des antennes du capteur et de l'émetteur à partir des coefficients stockés dans leurs mémoires associées et des mesures de la première sous-étape (71) et une troisième sous-étape (73) de détermination de la position/orientation du capteur.

**16.** Procédé selon la revendication 15, caractérisé en ce que la troisième sous-étape (73) se décompose en une phase d'initialisation et une phase d'optimisation non linéaire (74) permettant de déterminer la position/orientation du capteur.

**17.** Procédé selon la revendication 16, caractérisé en ce que la phase d'optimisation non linéaire (74) est itérative, une détermination $\vec{v}_m$ de la position/orientation étant définie à partir d'une détermination $\vec{v}_{2m}$ par la minimisation

d'un critère C :

$$\underset{\vec{v}}{Min}\, C = \underset{\vec{v}}{Min} \sum_{j=1}^{9} \left\{ [B]_m^j - ROT\left[B_o^j\left(\vec{X}_c\right) + B_1^j\left(\vec{X}_c\right)\right] + B_2^j\left(ROT, \vec{X}_c\right) \right)$$

$$\hat{\vec{v}} = \left| \begin{matrix} \vec{X}_c \\ \overrightarrow{ROT} \end{matrix} \right.$$

- $B_0$, $B_1$, $B_2$ étant les champs émis
- B étant le champ global
- 9 étant le nombre de composantes mesurées à chaque instant m.

**18.** Procédé selon l'une quelconque des revendications précédentes, caractérisé en ce que le système mobile est la ligne de visée ($L_V$) d'un viseur de casque.

**19.** Procédé selon la revendication 18, caractérisé en ce que les antennes et le casque sont modélisés en usine indépendamment les uns des autres et de la cabine de pilotage.

**Patentansprüche**

**1.** Verfahren zur Bestimmung einer Position und einer Ausrichtung eines beweglichen Systems ($L_v$) bezüglich eines Emitters (1) eines elektromagnetischen Felds, wobei das bewegliche System in einem Träger angeordnet ist, der mit einer Magnetfeldsonde (2) verbunden ist, und das Verfahren folgende Schritte aufweist:

- einen ersten Schritt der analytischen Modellbildung der elektromagnetischen Felder abhängig von den Koordinaten der Sonde (2), wobei ein erstes Feld ($B_0$) vom Emitter (1), ein zweites Feld ($B_1$) von den in den Träger durch das erste Feld ($B_0$) induzierten elektrischen Strömen und ein drittes Feld ($B_2$) von den elektrischen Strömen oder Magnetisierungen gebildet wird, die in das bewegliche System durch die beiden ersten Felder ($B_0$, $B_1$) induziert werden, und wobei der elektromagnetische Effekt jedes Felds ($B_0$, $B_1$, $B_2$) unabhängig von den Effekten der jeweils anderen Felder durch die Koeffizienten seines eigenen Modells charakterisiert ist,
- einen zweiten Schritt der Echtzeitberechnung der Position und der Ausrichtung der Sonde unter Verwendung der laufenden Meßwerte des elektromagnetischen Felds in Höhe der Sonde (2) und unter Verwendung der Modelle ($B_0$, $B_1$, $B_2$) des ersten Schritts, wobei die Position und die Ausrichtung der Sonde ausgehend vom gemessenen und korrigierten Feld ($B_c$) definiert wird,

dadurch gekennzeichnet, daß das Verfahren ein Polynomialmodell (B), das global und näherungsweise die Position und Ausrichtung des Systems zum Ausdruck bringt, mit einem nichtlinearen Modell der Felder ($B_0$, $B_1$, $B_2$) bezüglich der Position und Ausrichtung der Sonde kombiniert, wobei das erste Modell eine nicht-iterative Näherungslösung ergibt und das zweite Modell die Näherungswerte dieser Lösung zur genaueren Identifizierung der Position und Ausrichtung in sehr kurzer Zeit durch eine iterative Lösungsmethode eines nichtlinearen Kriteriums verwendet.

**2.** Verfahren nach Anspruch 1, dadurch gekennzeichnet, daß die elektromagnetischen Felder ($B_0$, $B_1$, $B_2$) bezüglich der drei verschiedenen Quellen getrennt von den Effekten der jeweils anderen Felder durch Identifizierung ihrer Parameter ($\vec{A}_0$, $\vec{A}_1$, $\vec{A}_2$) charakterisiert sind.

**3.** Verfahren nach einem beliebigen der vorstehenden Ansprüche, dadurch gekennzeichnet, daß die Parameter ($\vec{A}_0$) für das Modell der Effekte des ersten Felds ($B_0$) in einem dem Emitter (1) und der Sonde (2) zugeordneten Speicher gespeichert werden, während die Parameter ($\vec{A}_1$) für das Modell der Effekte des zweiten Felds ($B_1$) in einem Speicher am Träger und die Parameter ($\vec{A}_2$) für das Modell der Effekte des dritten Felds ($B_2$) in einem dem Helm (2) zugeordneten Speicher gespeichert sind.

**4.** Verfahren nach einem beliebigen der vorstehenden Ansprüche, dadurch gekennzeichnet, daß die Koeffizienten

($\vec{A}_{MK1}$) eines allgemeinen globalen Modells in einem Speicher (35) enthalten sind.

**5.** Verfahren nach einem beliebigen der vorstehenden Ansprüche, dadurch gekennzeichnet, daß der erste Schritt einen ersten Teilschritt (31) enthält, bei dem die Koeffizienten des Modells der Effekte einer Sonde und eines Emitters im freien ungestörten Raum bestimmt werden.

**6.** Verfahren nach Anspruch 5, dadurch gekennzeichnet, daß das Modell im freien Raum folgendermaßen erhalten wird:

Bei jeder Emission verfügt man über die drei Komponenten des emittierten Felds, also über die drei Vektoren $\vec{M}_1$, $\vec{M}_2$, $\vec{M}_3$, die in einer Meßmatrix [M] = [ $\vec{M}_1$, $\vec{M}_2$, $\vec{M}_3$] zusammengefaßt sind;

- ♦ Ziel des Modells $B_0$ im freien Raum ist es, alle Parameter zu identifizieren, von denen dieses Modell abhängt, nämlich:

  - + die Winkelkoordinaten $R_{E/Ref}$ und Positionskoordinaten $\vec{X}_E$ des Emitters in einem durch die Matrix des Übergangs vom Bezugssystem (Ref) zum Koordinatensystem des Emitters (E) definierten System;
  - + die Winkelkoordinaten der Sonde in einem Bezugssystem, die von der Matrix $R_{OC/R}$ definiert werden, wenn das Hilfsmittel, das heißt der Träger der Sonde, sich in einer Bezugswinkelposition befindet;
  - + die Korrekturmatritzen für den Maßstabsfaktor und die Kopplung zwischen dem Emitter [$H_R$ $K_R$] und der Sonde [$H_C$ $K_C$];
  - + den globalen Emitter-Sonden-Gewinn $k_{CR}$.

**7.** Verfahren nach einem beliebigen der vorstehenden Ansprüche, dadurch gekennzeichnet, daß der erste Verfahrensschritt einen Teilschritt (32) der Modellbildung des beweglichen Systems im freien Raum enthält, das mit einer Sonde (2) versehen ist und das Magnetfeld störende Materialien enthält.

**8.** Verfahren nach Anspruch 7, dadurch gekennzeichnet, daß der Verfahrensteilschritt (32), wenn Störquellen ($S_1$, $S_2$, $S_3$, ..., $S_k$) mit der Sonde (C) verbunden sind, in einer ersten Phase darin besteht, wenn die Quellen ($S_1$, $S_2$, $S_3$, ..., $S_k$) in ein beliebiges gegebenes Umgebungsmagnetfeld eingebettet sind, die von jeder Quelle hervorgerufene Störung als eine explizite Funktion des mittleren Magnetfeld in Höhe der Quelle auszudrücken, um ein für seine Störung im Zentrum der Sonde (C) repräsentatives Modell zu erzeugen, in einer zweiten Phase, in der die Sonde in das zu messende Magnetfeld eingebettet ist, die durch jede Quelle hervorgerufene Störung mithilfe ihres Modells und des mittleren Magnetfelds in dessen Höhe zu bestimmen, in einer dritten Phase die Störungen aufgrund der Störquellen ($S_1$, $S_2$, $S_3$, ..., $S_k$) zu summieren und in einer vierten Phase diese Summe von dem Meßwert der Sonde (C) abzuziehen, wobei jede Störquelle ($S_k$) durch mindestens eine äquivalente Windung ($S_{Pk}$) im Modell nachgebildet wird und die Veränderung des Umgebungsfelds ($B_k$) in Höhe der äquivalenten Windung einen Strom ($i_k$) in der Windung erzeugt, von dem ein Störfeld ausgeht.

**9.** Verfahren nach Anspruch 8, dadurch gekennzeichnet, daß die durch eine Störquelle ($S_k$) hervorgerufene Störung durch einen Magnetfeldvektor ($\vec{B}_{Pk}(O_C)$) in Höhe der Sonde (C) nachgebildet wird, wobei dieses Feld für jede Komponente wie folgt ausgedrückt wird:

$$\left(B_{Pk}\left(O_C\right)\right)_\ell = \left|\vec{B}_k\left(O_k\right)\right| \sum_{\ell=1}^{L_k} \sum_{m=o}^{\ell} P_\ell^m\left(Cos\theta_k\right)\left[A_{\ell,m,i}^k \cdot Cos\left(m\phi_k\right) + C_{\ell,m,i}^k \cdot Sin\left(m\phi_k\right)\right]$$

wobei gilt:

- $(B_{Pk}(O_c))_\ell$ ist die i-te Komponente des Vektors ($\vec{B}_{Pk}(O_c)$) im Zentrum der Sonde (C) und wird von mindestens einer Modellbildungswindung der Störquelle $S_k$ erzeugt, und i = 1, 2, 3;
- $\vec{B}_k(O_k)$ ist der Vektor des Umgebungsfelds im Punkt $O_k$ im Zentrum der Quelle k und $|\vec{B}_k(O_k)|$ ist dessen Modulwert;
- $\theta_k$ ist der Winkel zwischen einer Achse $\overrightarrow{O_cZ_c}$ des Bezugssystems der Sonde und dem Magnetfeldvektor $\vec{B}_k$ ($O_k$) im Zentrum $O_k$ der Windung;
- $\phi_k$ ist der Winkel zwischen einer Achse $\overrightarrow{O_cX_c}$ des Bezugssystems der Sonde und der Projektion des erwähnten Magnetfeldvektors $\vec{B}_k(O_k)$ auf die durch die Achsen $\overrightarrow{O_cX_c}$ und $\overrightarrow{O_cY_c}$ definierte Ebene, wobei ($O_c$,$X_c$,$Y_c$,$Z_c$)

das Bezugssystem der Sonde ist;

- $P^m_\ell(x)$ ist ein durch O definiertes Legendre-Polynom der Ordnung $\ell$,m wie folgt:

$$P_\ell^m(x)=\frac{(-1)^m(1-x^2)^{m/2}}{2^\ell\,\ell!}\frac{d^{\ell+m}}{dx^{\ell+m}}(x^2-1)^\ell$$

- $A^k_{\ell,m,i}$ und $C^k_{\ell,m,i}$ sind Konstanten.

**10.** Verfahren nach einem beliebigen der vorstehenden Ansprüche, dadurch gekennzeichnet, daß der erste Schritt einen Teilschritt (33) der Modellbildung des Trägers durch Messungen in diesem enthält, wobei der Träger mit einem kartographischen Hilfsmittel, einer Sonde und einem Emitter ausgerüstet ist.

**11.** Verfahren nach Anspruch 10, dadurch gekennzeichnet, daß ausgehend von Messungen die unbekannten Koeffizienten des Modells ($B_1$) in Kenntnis der Koordinaten und der Ausrichtung der Sonde in jedem Meßpunkt bis auf eine Translation und eine Drehung identifiziert werden.

**12.** Verfahren nach Anspruch 7, dadurch gekennzeichnet, daß die Identifizierung der Koeffizienten ($A_{\ell,m}$, $B_{\ell,m}$) des Modells von ($B_1$) durch Minimierung eines Entfernungskriteriums vom Typ der kleinsten Quadrate gemäß folgender Formel erfolgt:

$$\varepsilon^2 = MIN\,de \sum_{i=1}^{M}\left[\nabla\left[\sum_{\ell=0}^{L}\sum_{m=-\ell}^{\ell}\left[A_{\ell,m}\rho_i^\ell + B_{\ell,m}\rho_i^{-(\ell+1)}\right]Y_{\ell,m}(\theta\varphi)_i\right] - \left[B_{(C,\theta,\varphi)_i}\right]\right]^2$$

wobei gilt:

- M ist die Anzahl der Messungen,
- L ist die Ordnung des Legendre-Polynoms,
- der Gradient des Skalars $\phi(\rho,\theta,\varphi)$ lautet wie folgt:

$$\vec{\nabla}\phi=\vec{e}_1\frac{\partial\phi}{\partial\rho}+\vec{e}_2\frac{1}{\rho}\frac{\partial\phi}{\theta}+\vec{e}_3\frac{1}{\rho\sin\theta}\frac{\partial\phi}{\partial\varphi} \qquad (C11)$$

- die Ordnung des Modells wird durch Probieren bestimmt, bis der Fehler $\varepsilon^2$ ausreichend gering ist.

**13.** Verfahren nach einem beliebigen der vorstehenden Ansprüche, dadurch gekennzeichnet, daß der erste Schritt einen letzten Teilschritt (34) der Erzeugung eines globalen Modells (B) enthält, das die Summe der beiden unabhängig identifizierten Modelle ($B_0$, $B_1$) ist.

**14.** Verfahren nach Anspruch 13, dadurch gekennzeichnet, daß das globale Modell (B) ein Polynomialmodell ist.

**15.** Verfahren nach einem beliebigen der vorstehenden Ansprüche, dadurch gekennzeichnet, daß der zweite Verfahrensschritt einen ersten Teilschritt (71) der Messung des emittierten Felds, einen zweiten Teilschritt (72) der Korrektur der Antennen der Sonde und des Emitters ausgehend von den in ihren zugeordneten Speichern enthaltenen Koeffizienten und den Meßwerten des ersten Teilschritts (71) sowie einen dritten Teilschritt (73) der Bestimmung der Position und der Ausrichtung der Sonde enthält.

**16.** Verfahren nach Anspruch 15, dadurch gekennzeichnet, daß der dritte Teilschritt (73) sich aus einer Initialisierungsphase und einer nichtlinearen Optimierungsphase (74) zusammensetzt, woraus die Position und die Ausrichtung der Sonde bestimmt werden können.

**17.** Verfahren nach Anspruch 16, dadurch gekennzeichnet, daß die nichtlineare Optimierungsphase (74) iterativ ist, wobei eine Bestimmung $\vec{v}_m$ der Position/Ausrichtung ausgehend von einer Bestimmung $\vec{v}_{2m}$ durch die Minimisierung eines Kriteriums C wie folgt definiert wird:

$$\underset{\vec{v}}{Min}\, C = \underset{\vec{v}}{Min} \sum_{j=1}^{9} \left\{ [B]_m^j - ROT\left[ B_o^j\left(\vec{X}_c\right) + B_1^j\left(\vec{X}_c\right)\right] + B_2^j\left(ROT, \vec{X}_c\right)\right.$$

$$\vec{v} = \left| \begin{array}{l} \vec{X}_c \\ \overrightarrow{ROT} \end{array} \right.$$

und wobei gilt:

- $B_0$, $B_1$, $B_2$ sind die emittierten Felder,
- B ist das globale Feld,
- 9 ist die Anzahl der in jedem Zeitpunkt m gemessenen Komponenten.

**18.** Verfahren nach einem beliebigen der vorstehenden Ansprüche, dadurch gekennzeichnet, daß das bewegliche System die Blickachse ($L_V$) eines Helmsichtgeräts ist.

**19.** Verfahren nach Anspruch 18, dadurch gekennzeichnet, daß die Modellbildung der Antennen und des Helms im Werk unabhängig voneinander und von der Pilotenkabine erfolgt.

## Claims

**1.** Method for determining a position and an orientation of a mobile system ($L_V$) with respect to a transmitter (1) of an electromagnetic field, the mobile system being placed in a carrier and being linked to a magnetic field sensor (2), said method comprising the following steps:

- a first step of analytic modelling of the electromagnetic fields as a function of the co-ordinates of the sensor (2), a first field ($B_0$) being created by the transmitter(1), a second field ($B_1$) being created by the electrical currents induced in the carrier by the first field ($B_0$), and a third field ($B_2$) being created by the electrical currents or by magnetisations induced in the mobile system by the first two fields ($B_0 + B_1$), the electromagnetic effect of each field ($B_0$, $B_1$, $B_2$) being characterised, independently of the effects of the other fields, by the coefficients of a model thereof;
- a second step of computing, in real time, the position and the orientation of the sensor based on a current measurement of the electromagnetic field at the sensor (2) and on the models ($B_0$, $B_1$, $B_2$) from the first step, the position and orientation of the sensor being defined from the corrected measured field ($B_c$), characterised in that it associates a polynomial model (B) which provides a comprehensive and approximate expression of the position and orientation of the system, with a model of the fields ($B_0$, $B_1$, $B_2$) that is non-linear with respect to the position/orientation of the sensor, the first model enabling a non-iterative approximate resolution and the second model using the approximate values of said resolution in order to specifically identify the position/ orientation in a very short time by an iterative method of resolution of a non-linear criterion.

**2.** Method according to claim 1, characterised in that the electromagnetic fields ($B_0$, $B_1$, $B_2$) relating to the three different sources are characterised separately from the effects of the other fields by identification of the parameters thereof ($\vec{A}_0$, $\vec{A}_1$, $\vec{A}_2$).

**3.** Method according to either of the preceding claims, characterised in that the parameters ($A_0$) of the model of the effects of the first field ($B_0$) are stored in a memory associated with the transmitter (1) and the sensor (2), the parameters ($\vec{A}_1$) of the model of the effects of the second field ($B_1$) are stored in a memory related to the carrier, and the parameters ($\vec{A}_2$) of the model of the effects of the third field ($B_2$) are stored in a memory associated with the helmet (2).

**4.** Method according to any one of the preceding claims, characterised in that the coefficients ($\vec{A}_{MK1}$) of a generic comprehensive model are stored in a memory (35).

**5.** Method according to any one of the preceding claims, characterised in that the first step comprises a first sub-step

(31) of determining coefficients of the model of the effects of a sensor and a transmitter in free space, without disturbance.

**6.** Method according to claim 5, characterised in that the model in free space is obtained in the following manner:

- ♦ Combining, at each transmission, the three component vectors of the transmitted field, i.e. the three vectors: $\vec{M}_1$, $\vec{M}_2$, $\vec{M}_3$ in a measurement matrix [M]=[$\vec{M}_1$, $\vec{M}_2$, $\vec{M}_3$].
- ♦ The object of model $B_0$ in free space is to identify all the parameters upon which said model depends, viz.:

  + angular co-ordinates $R_{E/Ref}$ and co-ordinates of a position $\vec{X}_E$ of the transmitter in a reference system of co-ordinates defined by a translation matrix from the reference system of co-ordinates (Ref) to the system of co-ordinates of the transmitter (E);

  + angular co-ordinates of the sensor in a reference system of co-ordinates defined by a matrix $R_{CO/R}$ when the tool, i.e. the support of the sensor, is in an angular reference position;

  + matrices corresponding to a correction of scale factor and coupling of the transmitter [$H_R$ $H_R$] and of the sensor [$H_C$ $K_C$];

  + the overall transmitter/sensor gain : $K_{CR}$.

**7.** Method according to any one of the preceding claims, characterised in that the first step comprises a sub-step (32) of modelling, in free space, of the mobile system equipped with a sensor (2) and comprising field-disturbing materials.

**8.** Method according to claim 7, characterised in that with sources of disturbance ($S_1$, $S_2$, $S_3$, .... $S_k$) being linked to the sensor (C), the sub-step (32) consists, in a first phase, the sources ($S_1$, $S_2$, $S_3$, .... $S_k$) being inserted into any given ambient magnetic field, in expressing the disturbance caused by each disturbance source as an explicit function of the mean magnetic field existing at the disturbance source in order to create a model representing a disturbance thereof at the centre of the sensor (C), in a second phase, the sensor being inserted into the magnetic field to be measured, in determining the disturbance caused by each source based on the model thereof and on the mean magnetic field existing at the level thereof, in a third phase in summing the disturbances due to the sources ($S_1$, $S_2$, $S_3$, .... $S_k$), and in a fourth phase in deducting said sum from the measurement made by the sensor (C), each source ($S_k$) being modelled by at least one equivalent turn ($S_{Pk}$), the variations of the ambient field ($B_k$) at the equivalent turn creating a current ($i_k$) in said turn, which produces a disturbance field.

**9.** Method according to claim 8, characterised in that the disturbance caused by a source ($S_k$) is modelled by a magnetic field vector ($\vec{B}_{Pk}(O_c)$) at the sensor (C), said field being expressed as follows for each component:

$$\left(B_{Pk}\left(O_C\right)\right)_\ell = \left|\bar{B}_k\left(O_k\right)\right| \sum_{\ell=1}^{L_k} \sum_{m=o}^{\ell} P_\ell^m\left(Cos\theta_k\right)\left[A_{\ell,m,i}^k Cos\left(m\phi_k\right) + C_{\ell,m,i}^k Sin\left(m\phi_k\right)\right]$$

- $(B_{Pk}(O_c))_i$ being the ith component of the vector ($\vec{B}_{Pk}(O_c)$) at the centre of the sensor (C) and being produced by at least one modelling turn of the source ($S_k$), i = 1, 2, 3;

- ( $\vec{B}_k(O_k)$ being an ambient field vector at a point $O_k$ which is a centre of the source k and $|(\vec{B}_k(O_k)|$ a modulus thereof;

- $\theta_k$ being the angle between an axis $\overrightarrow{O_cZ_c}$ of the sensor system of co-ordinates and the magnetic field vector $B_k$ ($O_k$) at the centre $O_k$ of the turn;

- $\phi_k$ being the angle between an axis $\overrightarrow{O_cX_c}$ of the sensor system of co-ordinates and a projection of the aforesaid magnetic field vector $B_k(O_k)$ on the plane defined by the axes $\overrightarrow{O_cX_c}$ and $\overrightarrow{O_cY_c}$, ($O_c$,$X_c$,$Y_c$, $Z_c$) being the system of co-ordinates of the sensor;

- $P^m_\ell(x)$ being an $\ell,m$ order Legendre polynomial defined by 0

$$P_\ell^m(x)=\frac{(-1)^m(1-x^2)^{m/2}}{2^\ell \ell!}\frac{d^{\ell+m}}{dx^{\ell+m}}(x^2-1)^\ell$$

- $A^k_{\ell,m,i}$ and $C^k_{\ell,m,i}$ being constants.

**10.** Method according to any one of the preceding claims, characterised in that the first step comprises a sub-step (33) of modelling of the carrier by measurements therein, the carrier being provided with a set of cartographic tools, a sensor and a transmitter.

**11.** Method according to claim 10, characterised in that, on the basis of the measurements, the unknown coefficients of the model ($B_1$) are identified, with co-ordinates and orientation of the sensor, at each measurement point, being known to a nearest translation and to a nearest rotation.

**12.** Method according to claim 7, characterised in that the identification of the coefficients ($A_{\ell,m}$, $B_{\ell,m}$) of the model of ($B_1$) is carried out by least-squares error minimisation of a distance criterion based on the following equation:

$$\varepsilon^2 = MIN\, de \sum_{i=1}^{M}\left[\nabla\left[\sum_{\ell=o}^{L}\sum_{m=-\ell}^{\ell}\left[A_{\ell,m}\rho_i^\ell + B_{\ell,m}\rho_i^{-(\ell+1)}\right]\right]Y_{\ell,m}(\theta\varphi)_i\right] - \left[B_{(C.\theta.\varphi)_i}\quad\right]^2$$

wherein

M: number of measurements;
L: order of the Legendre polynomial;
a gradient of a scalar $\phi(\rho,\theta,\varphi)$ being expressed as:

$$\vec{\nabla}\phi=\vec{e}_1\frac{\partial\phi}{\partial\rho}+\vec{e}_2\frac{1}{\rho}\frac{\partial\phi}{\boldsymbol{\theta}}+\vec{e}_3\frac{1}{\rho\sin\theta}\frac{\partial\phi}{\partial\varphi} \qquad (C11)$$

and
an order of the model being determined by trial and error until the error $\varepsilon^2$ is sufficiently small.

**13.** Method according to any one of the preceding claims, characterised in that the first step includes a final sub-step (34) of generating a comprehensive model (B), which is the sum of the two models ($B_0$, $B_1$) identified independently.

**14.** Method according to claim 13, characterised in that the comprehensive model (B) is a polynomial model.

**15.** Method according to any one of the preceding claims, characterised in that the second step includes a first sub-step (71) of measuring the transmitted fields, a second sub-step (72) of correcting antennas of the sensor and of the transmitter on the basis of the coefficients stored in their associated memories, and of correcting measurements carried out in the first sub-step (71), and a third sub-step (73) of determining the position/orientation of the sensor.

**16.** Method according to claim 15, characterised in that the third sub-step (73) is broken down into an initialising phase and a non-linear optimising phase (74), allowing the position/orientation of the sensor to be determined.

**17.** Method according to claim 16, characterised in that the non-linear optimisation phase (74) is iterative, a determination $\vec{v}_m$ of the position/orientation being defined on the basis of a determination $\vec{v}_{2m}$ by minimising a criterion C as follows:

$$\underset{\vec{v}}{Min}\, C = \underset{\vec{v}}{Min} \sum_{j=1}^{9} \left\{ [B]_m^j - ROT\left[B_o^j\left(\vec{X}_c\right) + B_1^j\left(\vec{X}_c\right)\right] + B_2^j\left(ROT, \vec{X}_c\right) \right.$$

$$\vec{v} = \left| \begin{array}{l} \vec{X}_c \\ \overrightarrow{ROT} \end{array} \right.$$

- $B_0$, $B_1$, $B_2$ being the transmitted fields,
- B being the total field; and

9 being the number of components measured at each instant m.

**18.** Method according to any one of the preceding claims, characterised in that the mobile system is the line of sight ($L_v$) of a helmet visor.

**19.** Method according to claim 18, characterised in that the antennas and the helmet are modelled in a factory independently of one another and of the cockpit.

FIG. 1

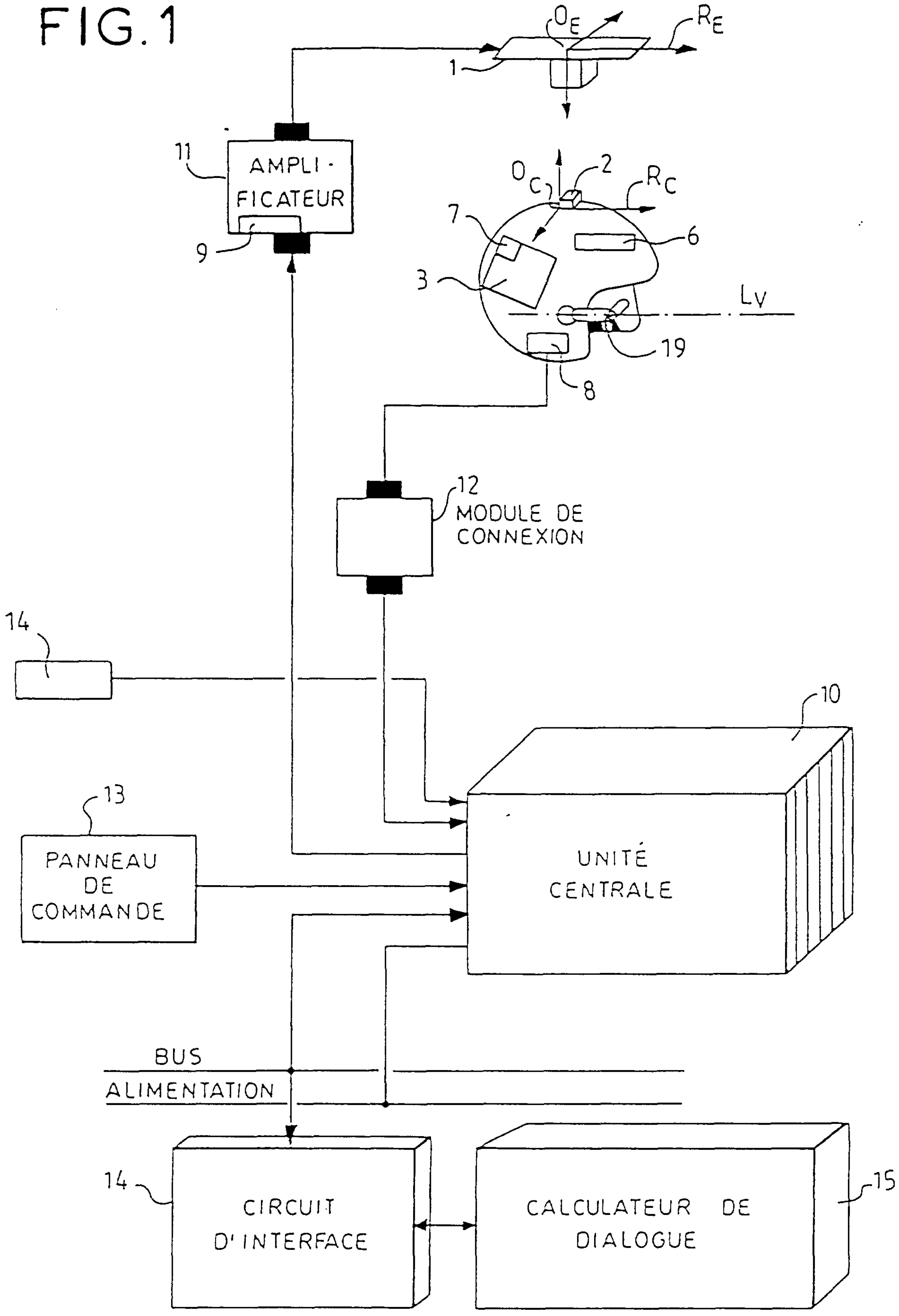

$O_E$
$R_E$
1
11
AMPLI-FICATEUR
9
$O_C$
2
$R_C$
7
6
3
Lv
19
8
12
MODULE DE CONNEXION
14
10
13
PANNEAU DE COMMANDE
UNITÉ CENTRALE
BUS
ALIMENTATION
14
CIRCUIT D'INTERFACE
CALCULATEUR DE DIALOGUE
15

FIG. 2

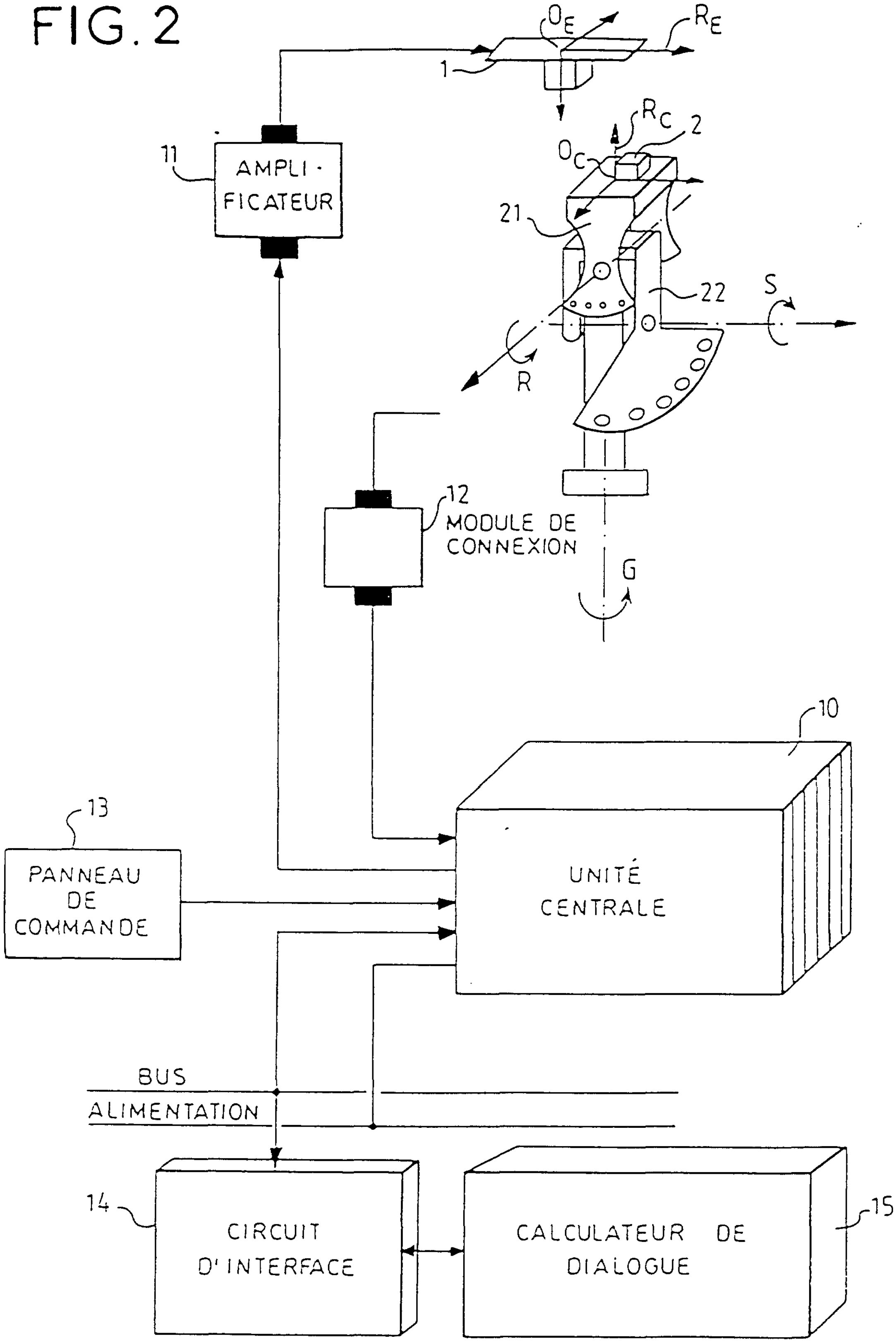

$O_E$
$R_E$
1
$R_C$
2
$O_C$
11
AMPLI-FICATEUR
21
22
S
R
12
MODULE DE CONNEXION
G
10
UNITÉ CENTRALE
13
PANNEAU DE COMMANDE
BUS
ALIMENTATION
14
CIRCUIT D'INTERFACE
CALCULATEUR DE DIALOGUE
15

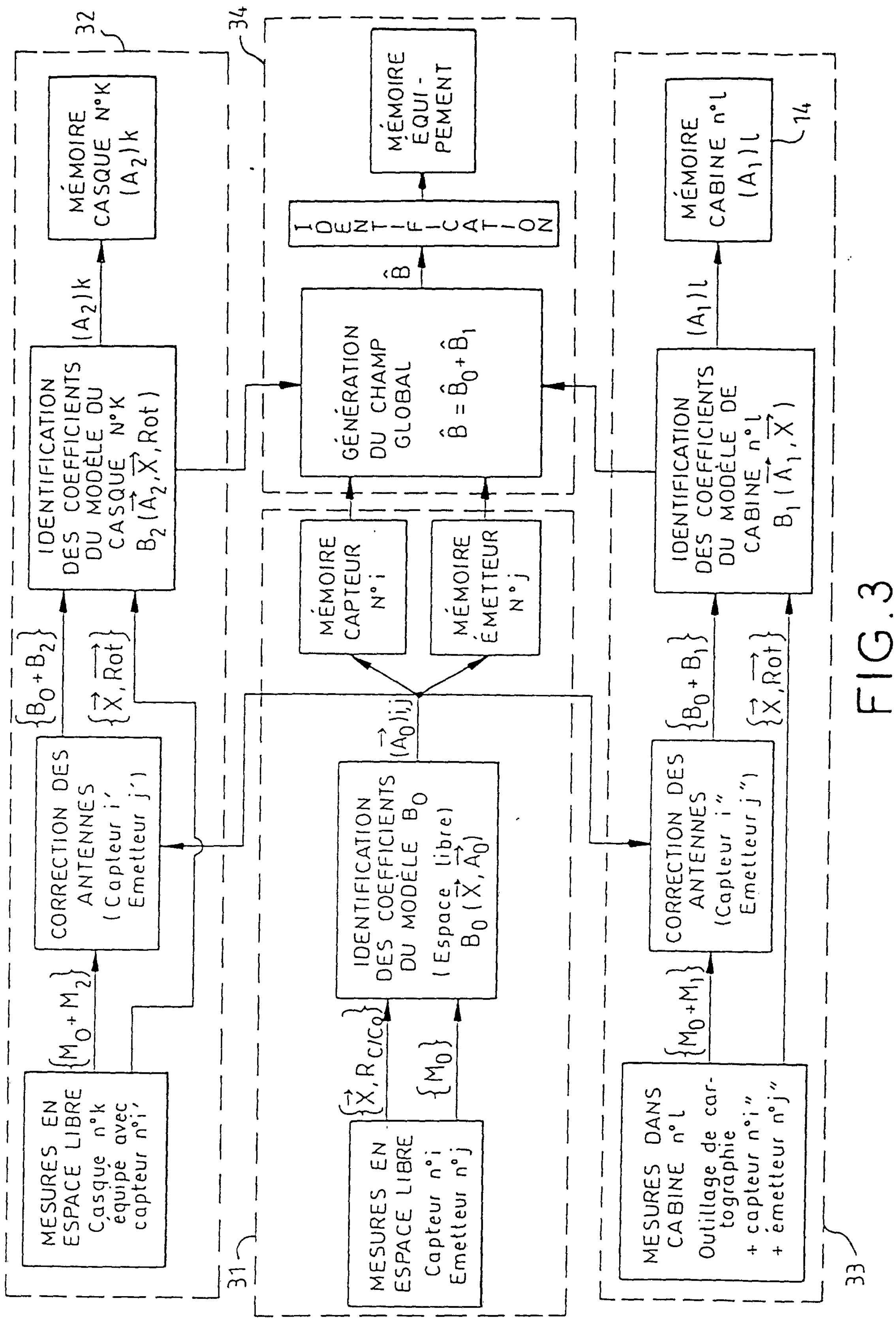
MÉMOIRE CASQUE N°K (A2)k
(A2)k
IDENTIFICATION DES COEFFICIENTS DU MODÈLE DU CASQUE N°K B2(A2,X,Rot)
{B0+B2}
{X,Rot}
CORRECTION DES ANTENNES (Capteur i' Emetteur j')
{M0+M2}
MESURES EN ESPACE LIBRE Casque n°k équipé avec capteur n°i'
32
34
MÉMOIRE ÉQUIPEMENT
IDENTIFICATION
B̂
GÉNÉRATION DU CHAMP GLOBAL B̂ = B̂0+B̂1
MÉMOIRE CAPTEUR N°i
MÉMOIRE ÉMETTEUR N°j
(A0)i,j
IDENTIFICATION DES COEFFICIENTS DU MODÈLE B0 (Espace libre) B0(X,A0)
{X,RC/C0}
{M0}
MESURES EN ESPACE LIBRE Capteur n°i Emetteur n°j
31
MÉMOIRE CABINE n°L (A1)L
14
(A1)L
IDENTIFICATION DES COEFFICIENTS DU MODÈLE DE CABINE n°L B1(A1,X)
{B0+B1}
{X,Rot}
CORRECTION DES ANTENNES (Capteur i" Emetteur j")
{M0+M1}
MESURES DANS CABINE n°L Outillage de cartographie + capteur n°i" + émetteur n°j"
33

FIG.3

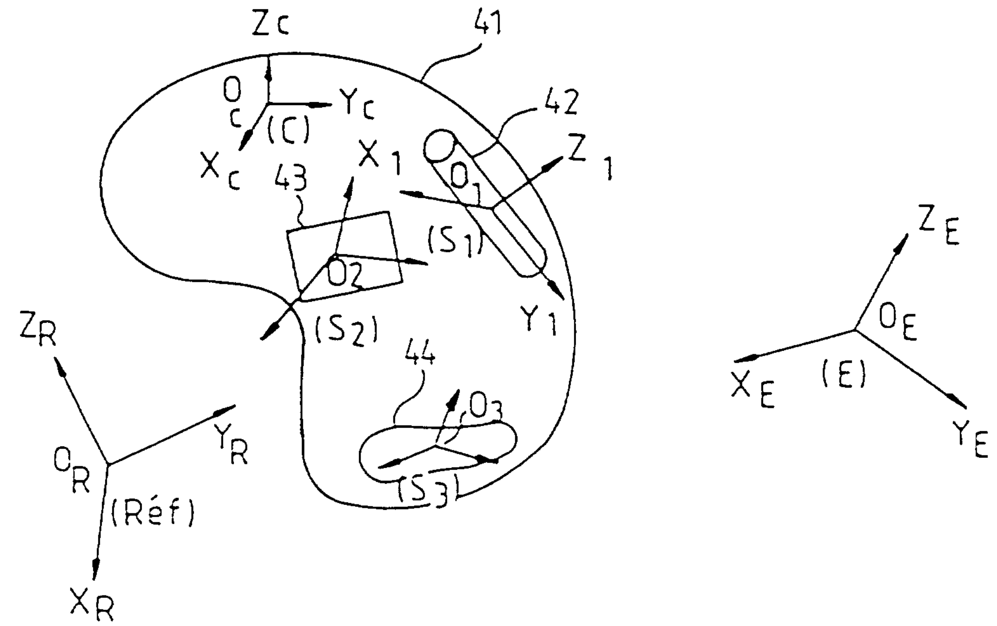
Zc
41
O
c
Yc
(C)
42
Xc
X 1
Z 1
43
O1
ZE
(S1)
O2
ZR
(S2)
Y1
OE
44
O3
XE
(E)
YR
OR
(S3)
YE
(Réf)
XR

FIG.4

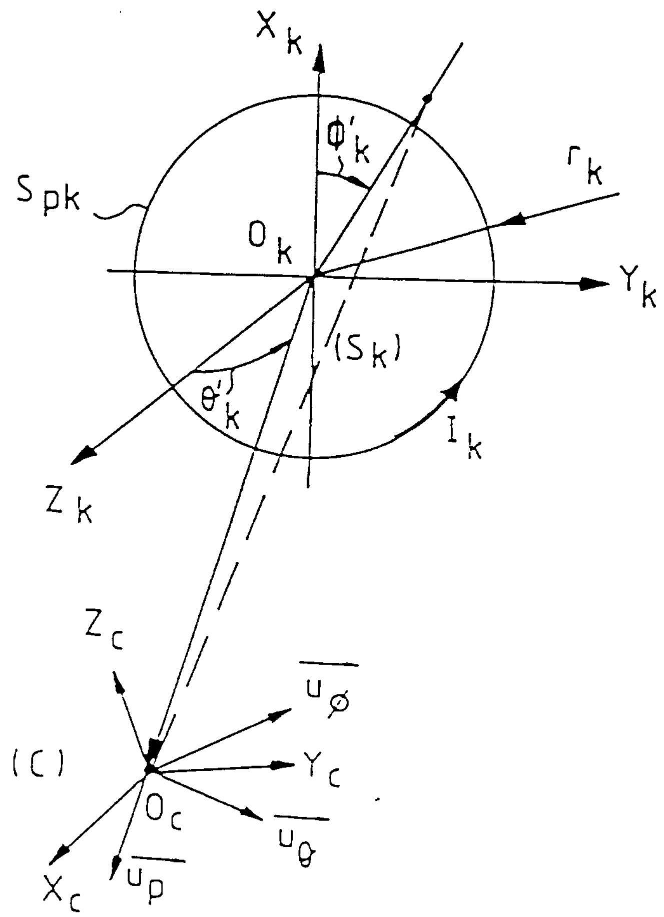


FIG.5

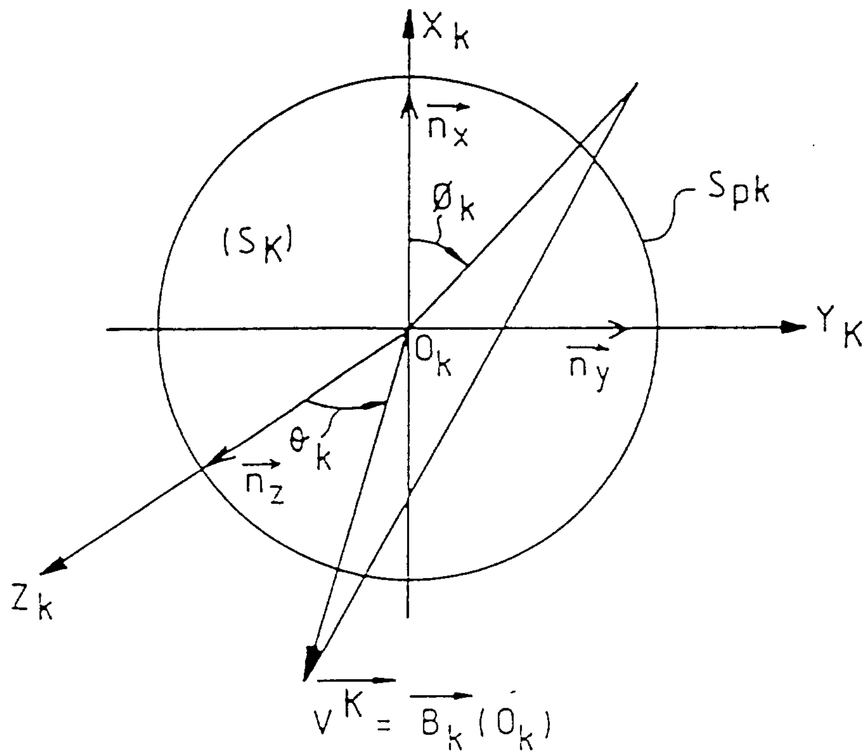


FIG.6

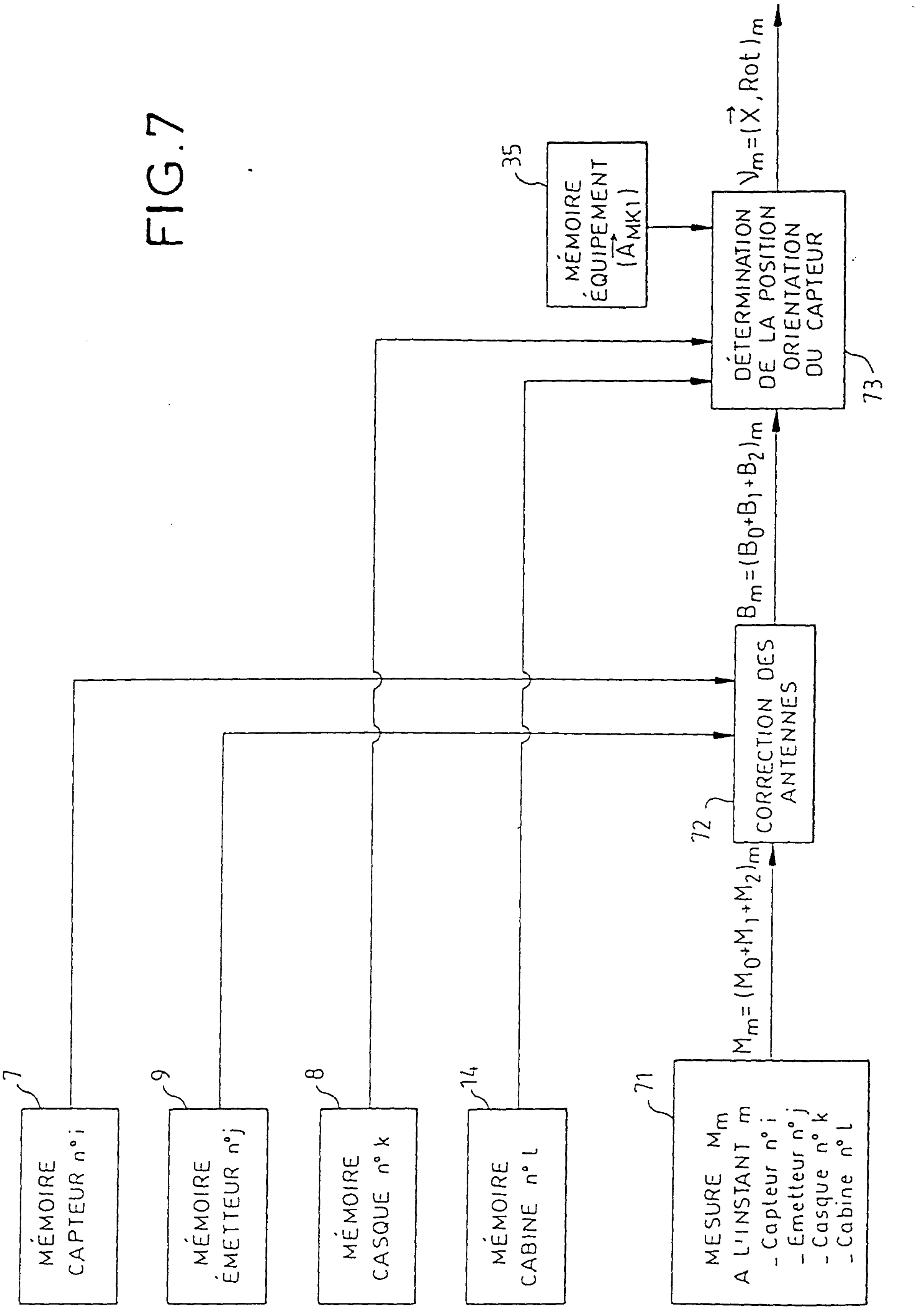
MÉMOIRE CAPTEUR n° i
7
MÉMOIRE ÉMETTEUR n° j
9
MÉMOIRE CASQUE n° k
8
MÉMOIRE CABINE n° L
14
MESURE $M_m$ A L'INSTANT m
- Capteur n° i
- Emetteur n° j
- Casque n° k
- Cabine n° L
71
$M_m = (M_0 + M_1 + M_2)_m$
CORRECTION DES ANTENNES
72
$B_m = (B_0 + B_1 + B_2)_m$
DÉTERMINATION DE LA POSITION ORIENTATION DU CAPTEUR
73
MÉMOIRE ÉQUIPEMENT $(\vec{A}_{MK1})$
35
$V_m = (\vec{X}, Rot)_m$

FIG.7

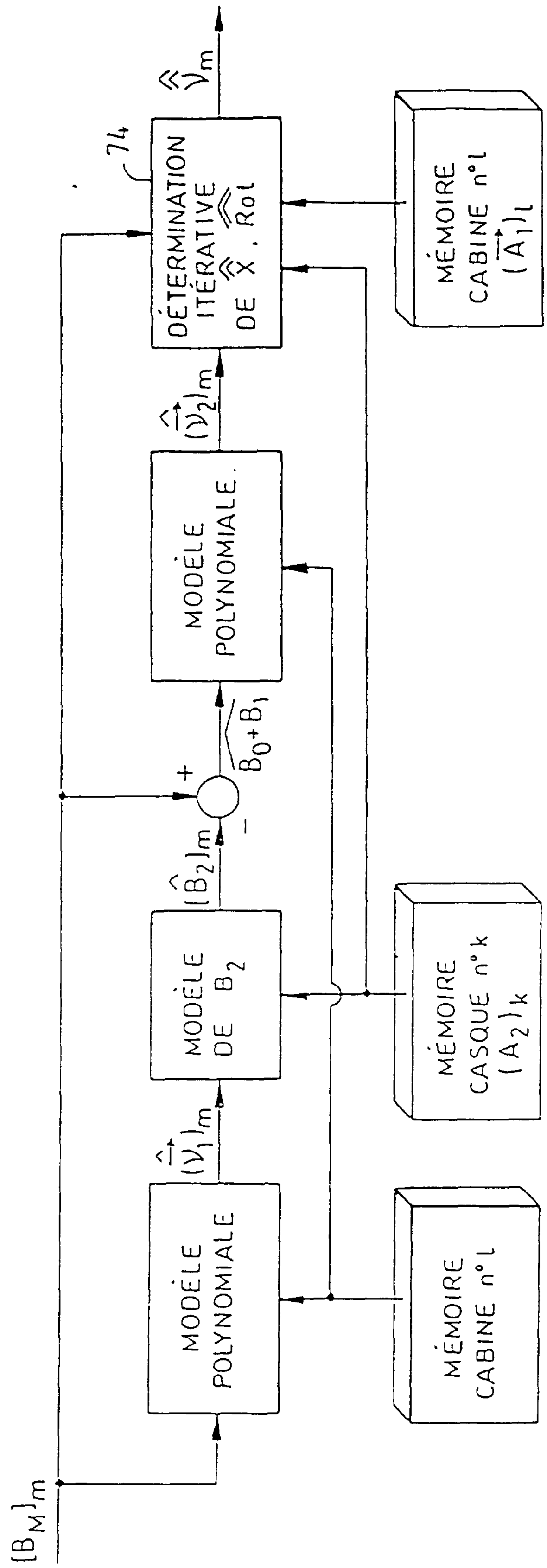
(B_M)m
MODÈLE POLYNOMIALE
MÉMOIRE CABINE n°l
(ν̂1)m
MODÈLE DE B2
MÉMOIRE CASQUE n°k (A2)k
(B̂2)m
+
-
B0+B1
MODÈLE POLYNOMIALE
(ν̂2)m
74
DÉTERMINATION ITÉRATIVE DE X, Rol
MÉMOIRE CABINE n°l (A1)l
ν̂m

FIG.8